# EUROPEAN PATENT SPECIFICATION

(11) **EP 4 131 809 B1**
(45) Date of publication and mention of the grant of the patent: **22.04.2026**
(21) Application number: 21189980.2
(22) Date of filing: 05.08.2021
(51) Int. Cl.: H04L 1/00

(54) **METHOD, APPARATUS AND SYSTEM RELATING TO DETERMINING A TARGET QUALITY**
VERFAHREN, VORRICHTUNG UND SYSTEM ZUR BESTIMMUNG EINER ZIELQUALITÄT
PROCÉDÉ, APPAREIL ET SYSTÈME RELATIFS À LA DÉTERMINATION D'UN OBJECTIF DE QUALITÉ

(43) Date of publication of application: 08.02.2023
(73) Proprietor: Nokia Technologies Oy, 02610 Espoo (FI)
(72) Inventor: Jayasinghe Laddu, Keeth Saliya, 02140 Espoo (FI); Kuru, Lauri Ilari, 02270 Espoo (FI); Pocovi, Guillermo, 9000 Aalborg (DK); Peralta Calvo, Elena, 33720 Tampere (FI)
(74) Representative: Cohausz & Florack

(56) References cited:
- US-A1- 2019 081 727
- US-A1- 2021 021 316
- FUJITSU: "Design of efficient CQI reports for high reliability transmission", vol. RAN WG1, no. Spokane, USA; 20170116 - 20170120, 16 January 2017 (2017-01-16), XP051208181, Retrieved from the Internet <URL:http://www.3gpp.org/ftp/Meetings_3GPP_SYNC/RAN1/Docs/> [retrieved on 20170116]

## Description

### TECHNICAL FIELD

Various example embodiments relate to determining a target quality based at least on one or more values for one or more transmission parameters.

### BACKGROUND

Transmissions of e.g. data between apparatuses may be configured using parameters. For instance, a parameter may be used to set a transmission power, a modulation scheme or a coding rate for a transmission. Values for such parameters may be determined taking into account one or more target metrics that the transmission should meet. Determining such values taking into account one or more target metrics may be done by an apparatus that has access to the target metrics. However, a receiving apparatus generally does not have access to the target metrics selected at the transmitter side.

US2021021316 A1 discloses a base station transmitting an indication for transmitting of the CQI to the UE. The indication contains at least a target BLER for measurement feedback, a data repetition transmission frequency, and a measurement resource of CSI. The UE determines the CQI according to the target BLER for measurement feedback, the data repetition transmission frequency, and the measurement resource of CSI, and transmits the CQI to the base station.

US2019081727 A1 discloses transmitting a quality target from a base station to a UE. Then the UE measures a channel and generates channel quality information based on the transmission quality target and the UE reports the channel quality information. The transmission quality target includes at least one of a target block error rate (BLER), a target signal-to-noise ratio (SNR), a service type, and a parameter related to a transmission target.

3GPP document R1-1700657 "Design of efficient CQI reports for high reliability transmission" from Fujitsu, 3GPP TSG RAN WG1 Meeting NR Ad-Hoc Meeting, Spokane, USA, 16th - 20th January 2017, discloses transmission of CSI measurement and report config to the UE. A gNB may notify the UE the target BLER for calculating CQI during the CSI measurement configuration. Dynamic indication of the target BLER enables to support different applications for the same UE with different latency and reliability requirements. Then the UE reports the CQI and the gNB schedules data accordingly.

### SUMMARY OF SOME EXAMPLE EMBODIMENTS

Independent claim 1 defines a first apparatus according to the invention.

Independent claim 6 defines a second apparatus according to the invention.

Independent claims 13, 14 and 15 define the corresponding method and system comprising first and second apparatus according to the invention.

Preferred embodiments are defined in the dependent claims.

According to a first example aspect, a first apparatus, e.g. a user equipmerit (UE) of a communication network, is disclosed comprising means for performing and/or configured to perform:
- receiving one or more values for one or more transmission parameters from a second apparatus, wherein the one or more transmission parameters relate to one or more transmissions from the second apparatus to the first apparatus;
- determining a target quality based at least on the one or more values for the one or more transmission parameters;
- determining feedback information based at least on the determined target quality; and
- transmitting the feedback information to the second apparatus.

Further according to the first example aspect, a method is disclosed, the method comprising:
- receiving, by a first apparatus, one or more values for one or more transmission parameters from a second apparatus, wherein the one or more transmission parameters relate to one or more transmissions from the second apparatus to the first apparatus;
- determining a target quality based at least on the one or more values for the one or more transmission parameters;
- determining feedback information based at least on the determined target quality; and
- transmitting the feedback information to the second apparatus.

Additionally, according to the first example aspect, a computer program is disclosed, the computer program comprising program instructions for causing, when the computer program is running on a processor, the processor to perform and/or control:
- receiving one or more values for one or more transmission parameters from a second apparatus, wherein the one or more transmission parameters relate to one or more transmissions from the second apparatus to a first apparatus;
- determining a target quality based at least on the one or more values for the one or more transmission parameters;
- determining feedback information based at least on the determined target quality; and
- transmitting the feedback information to the second apparatus.

According to a second example aspect, a second apparatus is disclosed, the second apparatus comprising means for performing and/or configured to perform:
- transmitting one or more values for one or more transmission parameters to a first apparatus, wherein the one or more transmission parameters relate to one or more transmissions from the second apparatus to the first apparatus;
- receiving, from the first apparatus, feedback information determined by the first apparatus based at least on a target quality that is determined by the first apparatus based at least on the one or more values for the one or more transmission parameters; and
- using the feedback information to adjust one or more values for one or more further transmission parameters related to one or more further transmissions from the second apparatus to the first apparatus.

Further according to the second example aspect, a method is disclosed, the method comprising:
- transmitting, by a second apparatus, one or more values for one or more transmission parameters to a first apparatus; wherein the one or more transmission parameters relate to one or more transmissions from the second apparatus to the first apparatus;
- receiving feedback information from the first apparatus, wherein the feedback information is determined by the first apparatus based at least on a target quality that is determined by the first apparatus based at least on the one or more values for the one or more transmission parameters; and
- using the feedback information to adjust one or more values for one or more further transmission parameters related to one or more further transmissions from the second apparatus to the first apparatus.

Additionally, according to the second example aspect, a computer program is disclosed, the computer program comprising program instructions for causing, when the computer program is running on a processor, the processor to perform and/or control:
- transmitting one or more values for one or more transmission parameters to a first apparatus, wherein the one or more transmission parameters relate to one or more transmissions from a second apparatus to the first apparatus;
- receiving, from the first apparatus, feedback information determined by the first apparatus based at least on a target quality determined by the first apparatus based at least on the one or more values for the one or more transmission parameters; and
- using the feedback information to adjust one or more values for one or more further transmission parameters related to one or more further transmissions from the second apparatus to the first apparatus.

Further, an apparatus according to the first or second example aspect is disclosed, the apparatus comprising at least one processor; and at least one memory including computer program code; the at least one memory and the computer program code configured to, with the at least one processor, cause the apparatus at least to perform the method according to the respective example aspect.

The disclosed apparatuses according to the respective aspects of the invention may comprise only the disclosed components (e.g. means, processor, memory) or may further comprise one or more additional components. In various embodiments, the means comprises at least one processor; and at least one memory including computer program code, the at least one memory and computer program code configured to, with the at least one processor, cause the performance of the apparatus. Therein, the "performance of the apparatus" may refer to what may be performed by the means of the apparatus of the respective aspect, e.g. the method according to the respective aspect.

The first apparatus/the apparatus according to the first example aspect may be a user equipment (UE) in various embodiments. For instance, it may be a UE of a mobile communication network, for instance a 3G, LTE/4G, 5G NR, or 5G network. Further, it may be a mobile device, e.g. a handset, a smartphone, a tablet, a laptop, or any other mobile device. In various embodiments, it may be a vehicle for travelling in air, water, or on land, e.g. a plane or a drone, a ship or a car or a truck. It may also be a robot, a sensor device, a wearable device, an Internet of Things (IoT) device, a Machine Type Communication (TC) device, or the likes.

The second apparatus/the apparatus according to the second example aspect may be a network node/network entity in various embodiments. For instance, it may be a network entity of a mobile communication network, for instance a 3G, LTE/4G, 5G NR, or 5G network. For instance, it may be a base station, e.g. a NodeB, eNB or gNB, or an access point, an access node, etc. It may also be part of and/or connected with any other network.

Furthermore, a system is disclosed, the system comprising at least a first apparatus and a second apparatus, e.g. an apparatus according to the first example aspect and an apparatus according to the second example aspect, respectively.

The means of the apparatus or system can be implemented in hardware. It may comprise for instance at least one processor for executing computer program code for performing the required function, at least one memory storing the program code and/or data, or both. Additionally or alternatively, it may for instance comprise circuitry that is designed to implement functions, for instance implemented in a chipset or a chip, like an integrated circuit. The means may comprise for instance one or more processing means or processors.

Apart from that, a computer-readable medium according to the first or second example aspect storing a computer program code is disclosed, the computer program code when executed by a processor causing an apparatus to perform and/or control the method according to the respective aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory (e.g. a Read-Only Memory (ROM) or hard disk of a computer, or be intended for distribution of the program, like an optical disc.

Any disclosure herein relating to the first or second example aspect is to be understood to be equally disclosed with respect to any subject-matter according to the respective example aspect, e.g. relating to an apparatus, a method, a computer program, and a computer-readable medium. Thus, for instance, the disclosure of a method step shall also be considered as a disclosure of means for performing and/or configured to perform the respective method step. Likewise, the disclosure of means for performing and/or configured to perform a method step shall also be considered as a disclosure of the method step itself. Furthermore, a "first apparatus" and a "second apparatus" herein may or may not be an apparatus according to the respective example aspect. It is noted that the terminology "first apparatus" and "second apparatus" was merely chosen for clarity in referencing. The terms "first" and "second" as such do not have technical implications on what is to be understood by an "apparatus".

For convenience, a list of abbreviations used in the following is already given at this point:
5G New Radio (5G NR)
acknowledgement (ACK)
bit error rate (BER)
block error probability (BLEP)
block error rate (BLER)
broadcast channel (BCH)
cell radio network temporary identifier (C-RNTI)
channel quality indicator (CQI)
cyclic redundancy check (CRC)
channel-state information (CSI)
downlink control information (DCI)
downlink shared channel (DL-SCH)
delta aggregation level (delta-AL)
delta modulation and coding scheme (delta-MCS)
generalized NodeB/next generation NodeB (gNB)
hybrid-automatic repeat request (HARQ)
HARQ process ID (HPID)
Institute of Electrical and Electronics Engineers (IEEE)
Internet of Things (IoT)
Industrial Internet of Things (IIoT)
log-likelihood ratio (LLR)
low-density parity-check (LDPC)
Long Term Evolution (LTE)
medium access control - control element (MAC-CE)
modulation and coding scheme (MCS)
multiple input multiple output (MIMO)
negative/no acknowledgement (NACK)
outer loop link adaptation (OLLA)
packet delay budget (PDB)
paging channel (PCH)
packet error rate (PER)
physical downlink control channel (PDCCH)
physical downlink shared channel (PDSCH)
physical uplink control channel (PUCCH)
PUCCH resource indicator (PRI)
quadrature amplitude modulation (QAM)
Quality of Service (QOS)
radio resource control (RRC)
semi-persistent scheduling (SPS)
service data adaptation protocol (SDAP)
Signal to Interference and Noise Ratio (SINR)
Signal to Noise Ratio (SNR)
spectral efficiency (SE)
transport block (TB)
transport block size (TBS)
total radiated power (TRP)
uplink (UL)
uplink shared channel (UL-SCH)
ultra-reliable low-latency communication (URLLC).

In the following, example details and example embodiments of the first and/or second example aspect introduced above will be described.

As described above, according to a second example aspect, a second apparatus comprises means for performing and/or configured to perform:
- transmitting one or more values for one or more transmission parameters to a first apparatus, wherein the one or more transmission parameters relate to one or more transmissions from the second apparatus to the first apparatus.

As described above, according to a first example aspect, a first apparatus comprises means for performing and/or configured to perform:
- receiving one or more values for one or more transmission parameters from a second apparatus, wherein the one or more transmission parameters relate to one or more transmissions from the second apparatus to the first apparatus.

In various embodiments, the one or more transmissions may be transmissions of blocks of e.g. data, e.g. via the Physical Downlink Shared Channel (PDSCH). The transmission parameters may for instance be related to, associated with, or used for, a transmission of a block, e.g. a transport block, which may for instance be a block of digital information, e.g. bits. Furthermore, in various embodiments, the one or more transmission parameters may be related to, associated with, or used for, a radio channel or radio bearer which is used for conveying the one or more transmissions, or may be associated with, or relate to, a type of transmission, and/or a specific transmission. In particular, the one or more transmission parameters may be used to configure the first apparatus to, e.g. properly, receive and/or decode the one or more transmissions. For instance, the transmission parameters may be parameters comprised in downlink control information (DCI) for dynamically-scheduled transmissions, or in scheduling information configured by RRC for semi-persistent transmissions. The DCI may configure the first apparatus how to receive and/or decode and/or acknowledge one or more transmissions from the second apparatus to the first apparatus, e.g. via the PDSCH.

The one or more values for the one or more transmission parameters may correspond to one value for one transmission parameter, one value for multiple transmission parameters, multiple values for one transmission parameter, or multiple values for multiple, e.g. respective, transmission parameters. An example value for an example transmission parameter is the value 6 for an HARQProcessID. However, a value for a transmission parameter may also be a range, a status, or an indication for the transmission parameter. In various embodiments, a value may be represented by a sequence of bits that are used to fill a field in a message used or reserved for a transmission parameter.

The transmitting of the one or more values for the one or more transmission parameters may be done for instance at least partly wirelessly, e.g. using a mobile communication network, for example based on LTE, 5G NR, or 5G. The one or more values for the one or more transmission parameters may be transmitted via a channel, e.g. of the mobile communication network. For instance, in various embodiments, the one or more values for the one or more transmission parameters may be transmitted to the first apparatus via a physical channel, e.g. a physical downlink control channel (PDCCH), for instance as part of Downlink Control Information (DCI) scheduling the corresponding one or more downlink transmissions, e.g. via a physical downlink shared channel (PDSCH). This way, the one or more transmission parameters and the one or more values may be associated with the physical channel.

In various embodiments, the one or more transmission parameters may for instance relate to and/or one or more values for the one or more transmission parameters may indicate one or more of:
- Information associated with or related to a hybrid-automatic repeat request scheme, e.g. a hybrid-automatic repeat request (HARQ) processes ID. The HARQ processes ID may for instance inform a device about the hybrid-ARQ process to use for storing and soft combining data, for instance in downlink scheduling assignments. In various embodiments, the one or more transmission parameters may be for instance a 4 bit parameter.
- Information on when an acknowledgement should be transmitted, e.g. when a HARQ acknowledgement should be transmitted relative to the reception of the PDSCH. In various embodiments, the parameter may be a 3 bit indicator, e.g. a PDSCH-to-HARQ feedback timing indicator which may for instance be provided in DCI.
- Information associated with an acknowledgement feedback, e.g. a channel for the acknowledgement feedback, for instance physical uplink control channel (PUCCH) used for HARQ-ACK feedback of the PDSCH, or other information associated with channel resources, e.g. PUCCH resource(s) or PUCCH resource sets. For instance in this context; the one or more transmission parameters may be or comprise a PDSCH-to-HARQ_feedback timing indicator, which is for instance comprised in the DCI, and/or the PUCCH resource indicator (PRI), which may additionally or alternatively be comprised in the DCI.
- Information associated with a priority, e.g. a physical layer priority.
- Information associated with multiple transmission and/or receiving antennas, e.g. a number of multiple input multiple output (MIMO) layers. In particularly, in various embodiments, this piece of information may be indicated by, and e.g. derived from, a combination of parameters, e.g. multi-antenna related parameters.
- Information associated with a table, e.g. a used modulation and coding scheme (MCS) table. In various embodiments, the MCS table may for instance be an MCS table with 256 Quadrature Amplitude Modulation (QAM) or an MCS table for low spectral efficiency (SE) entries.
- Information associated with a message format, e.g. a downlink control information (DCI) format.
- Information that is associated with the PDCCH scheduling the PDSCH conveying the one or more transmissions.
- One or more transport block sizes (TBS).
- Information associated with one or more modulation and/or coding schemes, e.g. one or more MCS indexes.
- A number of repetitions.
- Information associated with scheduling, e.g. associated with PDSCHs without a corresponding PDCCH or semi-persistent scheduled (SPS) PDSCHs. The one or more transmission parameters may for instance also be comprised in SPS-Config in radio resource control (RRC) specification.
- Information associated with an identifier used for identifying a recipient for the one or more transmissions. For example, the one or more transmission parameters may be or relate to a cell radio network temporary identifier (C-RNTI) and/or MCS-RNTI.

The one or more transmission parameters, e.g. those listed above, may be associated for instance with the PDSCH, for instance as being part of the DCI scheduling the PDSCH transmission. In various embodiments, the one or more transmission parameters are part of control information, e.g. DCI, used for scheduling the one or more transmissions, e.g. via PDSCH, from the second apparatus to the first apparatus.

Additionally or alternatively, the one or more transmission parameters may for instance be any other parameter associated with a physical channel like PDSCH. Furthermore, the one or more transmission parameters could be higher-layer parameters for configuring the one or more transmissions.

As described above, according to a first example aspect, the first apparatus comprises means for performing and/or configured to perform:
- determining a target quality based at least on the one or more values for the one or more transmission parameters.

For instance, the target quality may be determined based at least on one or more values for one or more transmission parameters transmitted in DCI in PDCCH and related to the PDSCH that was scheduled by the PDCCH.

In some embodiments the determined target quality may be a target Signal to Noise Ratio (SNR) or a target Signal to Interference and Noise Ratio (SINR). However, SNR and SINR are merely examples for a target quality. Further examples are for instance
- a target block error rate
- a target bit error rate;
- a target log-likelihood ratio;
- a target number of flipped bits;
- a target number of low-density parity-check code iterations;
- a target block error probability;
- a target number of failed parity checks;
- target mutual information, e.g. mutual information per bit; or
- a combination of a target block error rate and a number of retransmissions. For example, the target quality could be "BLERtarget=1e-5 achieved with one-shot-transmission" or "BLERtarget=1e-5 achieved with initial transmission and 1, 2, or 3-retransmissions".

The target quality may relate to, be associated with and/or indicate a quality of one or more further transmissions from the second apparatus to the first apparatus.

A block error rate (BLER) may for instance be defined as follows. If a number of code blocks, e.g. blocks of digital information, is received, the block error rate may be the number of received errored code blocks divided by the total number of received code blocks. The code blocks may for instance be code blocks of Long Term Evolution (LTE), 5G New Radio (NR), or 5G.

An alternative definition may for instance be as follows. If a number of transport blocks, e.g. blocks of digital information, is received, the block error rate may be the number of received errored transport blocks divided by the total number of received transport blocks. The transport blocks may for instance be transport blocks of Long Term Evolution (LTE), 5G New Radio (NR), or 5G. However, both definitions are only examples and other definitions of the BLER and/or transport and/or code blocks are possible.

In various embodiments, error-detecting codes may be used to determine whether a block was received error-free. An example for such an error-detecting code is a cyclic redundancy check (CRC) code which may be attached to a code block. Additionally or alternatively, parity check of the error-correction code or other error-detecting codes, like hash functions or other types of parity bits, may be used. Still alternatively, one could use one or more metrics of the decoding of a code block to determine whether the code block is erroneous, such as a final LLR value, or a number of decoding iterations.

In various embodiments, a target BLER may indicate that a transmission should be done with a BLER less than (or less than or equal to) the target BLER. A target BLER may for instance be 10⁻¹, 10⁻², 10⁻³, 10⁻⁴, 10⁻⁵ or any value less than, in between or greater than the mentioned values.

In various embodiments, the target quality may be configured or adjusted dynamically, for instance by the second apparatus, e.g. a network node like a base station. The configuration may be done for instance by taking into account a transmission scenario. For instance, if one or more transmissions are to occur in or for a low latency scenario, the target quality of the one or more transmissions may be high, for instance to avoid retransmissions. Thus, the target quality may be determined accordingly, e.g. the target quality may be determined to be a low target BLER. By contrast, if for instance the transmission scenario is not a low latency scenario, and can afford some re-transmissions, the target quality of the one or more transmissions may be lower. Thus, the target quality may for instance be determined to be a target BLER that is greater than that in the low latency scenario.

In various embodiments, the target quality may be associated with and/or derivable from the one or more values for the one or more transmission parameters. In particular, this may be the case even though the one or more values for the one or more transmission parameters respectively indicate information for configuring the first apparatus to receive and/or decode the one or more transmissions and/or for scheduling the one or more transmissions and/or for acknowledging the one or more transmissions. Thus, in various embodiments, the one or more values for the one or more transmission parameters may have a double function, e.g. respectively indicating information for receiving and/or decoding and/or scheduling and/or acknowledging the one or more transmissions, and allowing that the target quality is derivable by the first apparatus from the one or more values for the one or more transmission parameters. So for instance, in various embodiments, the second apparatus may convey the one or more values for the one or more transmission parameters in respective fields of a message, e.g. DCI, and, without having to add a field to or modify a field or the structure of the message for another value, may convey the target quality. In various embodiments, the target quality may be derivable from the one or more values for the one or more transmission parameters e.g. using a table, e.g. a look-up table, or e.g. a function.

The determining of the target quality based at least on the one or more values for the one or more transmission parameters may be done in various ways. In various embodiments, the first apparatus may determine the target quality further using a, e.g. configured or pre-defined, mapping information. The mapping information may for instance indicate a mapping between different values of the one or more transmission parameters and different respective target qualities. For instance, the mapping information may be a table or a database. However, the mapping information may additionally or instead be or comprise a function and/or rules for mapping.

Accordingly, in various example embodiments according to the second example aspect, the means of the second apparatus are further configured to perform:
- configuring mapping information, storing the mapping information, and/or transmitting the mapping information to the first apparatus, wherein the mapping information provides a mapping between different values of the one or more transmission parameters and respective different target qualities.

In various example embodiments according to the first example aspect, the means of the first apparatus are further configured to perform:
- receiving and/or storing mapping information, wherein the mapping information provides a mapping between different values of the one or more transmission parameters and different respective target qualities, and wherein the target quality is determined further using the mapping information.

The one or more transmission parameters are the one or more transmission parameters for which one or more values were transmitted by the second apparatus and received by the first apparatus, as described above.

The second apparatus may inform the mapping information in such a way that the mapping information is valid for e.g. only one transmission, e.g. only the transmission scheduled using the one or more transmission parameters. In other embodiments, the mapping information could be informed such that the first apparatus may use it for several further transmissions.

Let us consider the following simple example relating to a mapping information. In this example, the one or more transmission parameters are a parameter A. In this example, we do not consider the configuration/scheduling function of the parameter A further. However, in this example, the first apparatus comprises means for receiving the parameter A and the received parameter A has a value less than e.g. 0.5. In the example, the mapping information maps a value of less than 0.5 of the parameter A to e.g. 10⁻¹as target quality. On the other hand, in the present example, if the first apparatus had received the parameter A having a value greater than 0.5, the mapping information would have indicated 10⁻² for the target quality. Thus, in various embodiments, a range of values less than a first threshold is mapped to a first target quality and a range of values greater than the first threshold is mapped to a different target quality. In further embodiments, this principle may be extended. For instance, a range of values less than a first threshold may be mapped to a first target quality, a range of values greater than the first threshold but less than a second threshold may be mapped to a second target quality which is different from the first target quality, and a range of values greater than the second threshold may be mapped to a third target quality which is different from the first and the second target quality. More than two thresholds may be similarly used. This way, the target quality may be determined and adjusted for different transmissions.

Other examples that revert to the one or more transmission parameters described above are given below. In these examples, it is assumed that the target quality is a BLER target. However, as explained before, the target quality may be any other piece of information that is associated with or relates to a target quality of one or more, e.g. potential, transmissions from the second apparatus to the first apparatus. Thus, in other embodiments, the BLER target rate mentioned in the examples below may be replaced by any other target quality. Similarly, in these examples, PDCCH is assumed as an example for a physical, e.g. PHY layer, channel. However, in other embodiments, another physical channel may be used.

In this present example, the first apparatus uses a mapping information. The mapping information may be configured, e.g. by means of Radio Resource Control (RRC) protocol, or pre-defined. The mapping information may indicate a mapping between one or more values for one or more transmission parameters that are, as an example, associated with or used for a PDSCH and a BLER target. As an example, different BLER targets may be determined by the first apparatus, e.g. based on the received one or more parameters or, more specifically, based on their different values (which may also be indications or status). The one or more parameters may be associated with or used for a PDSCH. The determining of the target quality using the mapping information may for instance be done as described in the following for one or more transmission parameters:
- HARQ processes ID: the first apparatus may receive and/or store a mapping information indicating that a set of HARQ process IDs are associated with, e.g. mapped to, one BLER target and another set of HARQ process IDs are associated with, e.g. mapped to, another BLER target.
- PDSCH to HARQ timing: the first apparatus may receive and/or store a mapping information that PDSCHs associated with PDSCH-to-HARQ_feedback timing indicator (provided in the DCI) below a certain value are associated with, e.g. mapped to, one BLER target and PDSCHs associated with higher PDSCH-to-HARQ_feedback timing indicator are associated with, e.g. mapped to, another BLER target.
- PUCCH used for HARQ-ACK feedback of the PDSCH: PUCCH resource(s) or PUCCH resource sets may be mapped to BLER target(s). Such PUCCH resource(s) and/or PUCCH resource sets, e.g. for HARQ-ACK, may for instance be determined based on, e.g. derived from, a PDSCH-to-HARQ_feedback timing indicator field, e.g. in the DCI, and/or PUCCH resource indicator (PRI), e.g. also a field in the DCI.
- Physical layer priority: the first apparatus may receive and/or store a mapping information indicating that high-priority PDSCHs are associated with, e.g. mapped to, one BLER target and low-priority PDSCHs are associated with, e.g. mapped to, another BLER target.
- The number of MIMO layers: the first apparatus may receive and/or store a mapping information indicating that PDSCH with a number of MIMO layers below a given value are associated with, e.g. mapped to, one BLER target and PDSCH with a number of MIMO layers above the given value are associated with, e.g. mapped to, another BLER target.
- Used MCS table: the first apparatus may receive and/or store a mapping information indicating that one MCS table (MCS table with 256QAM) is associated with, e.g. mapped to, one BLER target and another MCS table (MCS table for low SE entries) is associated with, e.g. mapped to, another BLER target.
- In certain embodiments, C-RNTI and MCS-RNTI may also be associated with, e.g. mapped to, different BLER targets. The first apparatus may receive and/or store corresponding mapping information indicating this.
- DCI formats or any other parameter associated to the PDCCH scheduling the PDSCH: the first apparatus may receive and/or store a mapping information indicating that one DCI format (e.g. DCI format 1_2) is associated with, e.g. mapped to, one BLER target and another DCI format (e.g. DCI.format 1_1) is associated with, e.g. mapped to, another BLER target. Similar association, e.g. mapping, can be made based on a PDCCH aggregation level or a coreset where the PDCCH is detected.
- TB sizes and MCS indexes: the first apparatus may receive and/or store a mapping information that PDSCHs with a transport block size (TBS) below a given value is associated with, e.g. mapped to, one BLER target and TBS above a given value is associated with, e.g. mapped to, another BLER target. A similar principle may be applied for e.g. MCS indexes.
- The number of repetitions: the first apparatus may receive and/or store a mapping information that PDSCHs with one number of repetitions are associated with, e.g. mapped to, one BLER target and PDSCHs with another number of repetitions are associated with, e.g. mapped to, another BLERtarget.
- Semi-persistent PDSCH: PDSCHs without a corresponding PDCCH or semi-persistent scheduled PDSCHs may be mapped to a respective specifically configured BLER target, e.g. using a received and/or stored mapping information. In various embodiments, the BLER target may be further configured individually per SPS configuration (e.g. provided by SPS-Config in RRC specifications). Thus, in various embodiments, the SPS configuration may be mapped to a BLER target.
- Any other parameter associated with PDSCH and/or PDCCH: a similar mechanism may be applied to any other parameter associated with, e.g., PDSCH and/or PDCCH.

In various embodiments, the target quality may be associated with a first physical channel. The first physical channel may then again be associated with a second physical channel so that the target quality that is associated with the first physical channel may also be determined indirectly, e.g. using a determination of the target quality that is associated with the second physical channel. For instance, the target quality may be a BLER target and the first physical channel may be the PDCCH. The BLER target for PDCCH may then for instance be determined based on, e.g. derived from, the BLER target of the PDSCH it points to. For example one can use BLERtarget(PDCCH) = BLERtarget(PDSCH) / 10. On the other hand, in various embodiments, the target quality associated with a first physical channel and the target quality associated with a second physical channel may be derived separately.

In some embodiments, the first apparatus may be configured, e.g. by the second apparatus, to determine the target quality even though the first apparatus has no access to a mapping information, e.g. prior to receiving and or storing the mapping information, for instance prior to receiving the mapping information via RRC. Therefore, in various embodiments according to the first example aspect, the means of the first apparatus are further configured to perform: checking whether the target quality is determinable based on the one or more values for the one or more transmission parameters. The checking may for instance comprise checking whether the mapping information for determining the target quality based on the one or more values of the one or more transmission parameters is available and/or accessible. Then, for instance, if the mapping information is available and/or accessible, a target quality is determinable based on the one or more values of the one or more transmission parameters. The first apparatus may then, if a target quality is determinable based on the one or more values for the one or more transmission parameters, determine a target quality based on the one or more values for the one or more transmission parameters. On the other hand if a target quality is not determinable based on the one or more values for the one or more transmission parameters, for instance when the mapping information is not available and/or inaccessible, the first apparatus may determine a target quality based at least on a default value.

Additionally or alternatively, a similar situation may occur in the following scenario. In various embodiments according to the first example aspect, the first apparatus receives one or more values for one or more transmission parameters from a second apparatus. However, it may occur that the one or more values for the one or more parameters are not associated with a target quality. Not being associated with a target quality may for instance mean that there is no mapping from values of the one or more transmission parameters to a target quality, e.g. the first apparatus knows, e.g. based on a predefined configuration, that one or more values for these transmission parameters cannot be used for determining a target quality. In such embodiments, the means comprised in the first apparatus may be further configured to perform: checking whether the one or more values for the one or more transmission parameters are associated with a target quality. Then, for instance, if the one or more values for the one or more transmission parameters are associated with a target quality, the first apparatus may determine the target quality based on the one or more values for the one or more transmission parameters. On the other hand if the one or more values for the one or more transmission parameters are not associated with a target quality, the first apparatus may determine the target quality based at least on a default value. An example for such a scenario may be that a first apparatus is scheduled with reserved entries of an MCS table. Then, the first apparatus may be supposed to determine a target quality, e.g. a target BLER, where there is no transmission parameter associated with, e.g. comprised in, PDCCH to derive BLER target. In this example, the first apparatus may therefore determine the target quality, e.g. the BLER target, using at least a default value.

If the first apparatus determines the target quality based at least on a default value, it may or may not determine the target quality further based on one or more further pieces of information.

In various example embodiments according to the first example aspect, the means of the first apparatus are further configured to perform:
- determining feedback information based at least on the determined target quality; and
- transmitting the feedback information to the second apparatus.

In various example embodiments according to the second example aspect, the means of the second apparatus are further configured to perform:
- receiving, from the first apparatus, feedback information determined by the first apparatus based at least on a target quality that is determined by the first apparatus based at least on the one or more values for the one or more transmission parameters; and
- using the feedback information to adjust one or more values for one or more further transmission parameters, and wherein the one or more further transmission parameters relate to one or more further transmissions from the second apparatus to the first apparatus.

In various embodiments, the feedback information is represented by a number of bits. The number of bits may be predetermined and/or dynamic. The feedback information may be quantized for representation as a number of bits. However, other formats with or without quantization are possible to represent the feedback information. The feedback information may be one piece of information, e.g. one value, or several pieces of information, e.g. several values.

The first apparatus may be configured by the second apparatus to determine and transmit the feedback information, for instance by a message, a parameter, or the mapping information. Additional configuration steps may also be taken in this context. For instance, the second apparatus may configure the way in which the first apparatus will transmit the feedback information to the second apparatus, e.g. the channel and/or the timing and/or whether the feedback information is to be piggy-backed and/or attached to another message that e.g. is already scheduled and/or needs to be sent anyway. For instance, the first apparatus may configure the second apparatus whether to transmit the feedback information with a HARQ-ACK information of PDSCH or e.g. periodically, e.g. as a complement to CSI reporting.

The determining of the feedback information may comprise estimating, e.g. measuring and/or calculating. Further, determining the feedback information based at least on the determined target quality may be understood to mean that the feedback information is based at least on the one or more values of the one or more transmission parameters and the mapping information based on which the target quality was determined. In various embodiments, the feedback information may be determined based at least on the target quality and further pieces of information, e.g. at least one further piece of information. Such a further piece of information may have been received, stored, calculated, estimated or measured. Like the feedback information, the further piece of information may be associated with a quality of one or more past and/or, e.g. potential, future transmissions, e.g. from the second apparatus to the first apparatus. For instance, the further piece of information may indicate the estimated or measured quality of one or more past transmissions and/or the estimated quality of one or more transmissions that could be received, e.g. potential transmissions. The feedback information may be determined by processing the target quality and the further piece of information, e.g. combining, adding, subtracting, multiplying, mapping or comparing the target quality and the further piece of information.

The feedback information may be based at least on the target quality and/or may be useable and/or used by the second apparatus to adjust one or more values for one or more further transmission parameters, wherein the one or more further transmission parameters relate to one or more further, e.g. potentially upcoming, transmissions from the second apparatus to the first apparatus. The one or more further transmission parameters whose values may be adjusted may for instance be or relate to a transmission power or a modulation and coding scheme. In various embodiments, the one or more further transmission parameters are different from the one or more transmission parameters based on whose values the target quality is determined by the first apparatus. However, it may occur that the one or more further transmission parameters are, e.g. partly or wholly, the same as those one or more transmission parameters based on whose values the target quality is determined by the first apparatus

In various embodiments, the one or more further transmission parameters that relate to one or more further transmissions from the second apparatus to the first apparatus are or comprise an offset, e.g. an outer loop link adaption (OLLA) offset. Thereby, in some embodiments, the feedback information may provide the second apparatus with information that the second apparatus can use to adjust a value of a further transmission parameter in order to approach the target quality for one or more further transmissions, e.g. adjust MCS selection for link adaptation. So in various embodiments, the second apparatus may adjust the one or more values for the one or more further transmission parameters to achieve or to approach the target quality for the one or more further transmissions, so that the target quality is achievable by the one or more further transmissions with the so-adjusted one or more values for the one or more further transmission parameters.

For example to that end, the feedback information may indicate whether an estimated quality of one or more potential further transmissions using the same MCS and the same transport block size would be less or greater than the determined target quality. Additionally or alternatively, the feedback information may for instance indicate how a value for a further transmission parameter that is associated with one or more transmissions, e.g. at the second apparatus, may be adjusted to meet or approach the determined target quality.

In various embodiments of the first example aspect, the means of the first apparatus are further configured to perform:
- receiving the one or more transmissions; and
- estimating a quality of the one or more received transmissions, wherein the feedback information is determined further based at least on the estimated quality.

The one or more transmissions which are received may be for instance the transmission in PDSCH which was scheduled using the one or more transmission parameters. Estimating the quality of these transmissions may be done using the same metric as for the target quality. However, this is not necessarily the case. Any metric described with respect to the target quality may similarly be used for the estimated quality.

In various embodiments, the feedback information that is determined is determined by the first apparatus comparing the estimated quality of the one or more received transmission and the determined target quality of the received transmission. It may relate to a change of one or more values for one or more transmission parameters at the second apparatus that may be used to meet or approach the determined target quality.

In various embodiments, the feedback information may be or comprise a delta-MCS, e.g. for data, e.g. a transport block (TB), which was for instance received with MCS index *I_{MCS}.* In such embodiments, delta-MCS may be calculated from the difference between *I_{MCS_tgt}* and *I_{MCS}*, where *I*_{*MCS*_*tgt*} may be the largest MCS index such that an estimated BLER for data, e.g. the TB, received with this MCS index would be smaller than or equal to a BLER target (which is an example for a target quality), and I_{MCS} is the MCS index of the received data, e.g. a TB. The estimated BLER may be understood as an example for a further piece of information based on which the feedback information may be determined by the first apparatus. In various embodiments, the estimated BLER for data, e.g a TB, is the largest error probability estimate of a code block within the data.

In some embodiments, an additional offset is used in the determining of the example feedback information delta-MCS. For instance, delta-MCS may be determined as *delta-MCS = I_{MCS_tgt} - I_{MCS}* - *offset.* In other embodiments, there is no additional offset used in the determining of the example feedback information delta-MCS. The exact offset value to be used could also be derived from the one or more transmission parameters.

Apart from that, in some embodiments, the TB size for determining *I_{MCS_tgt}* may be the TB size of received TB. In other embodiments, it may be another TB size.

Moreover, in various embodiments, the feedback information may be transmitted comprised in a message. The message may or may not comprise further information. For instance, if the feedback information is a delta-MCS, it may be transmitted jointly with HARQ-ACK codebook, e.g. in the same message and/or triggered by the same event, or separately from HARQ-ACK codebook, e.g. in separate messages (while they may still be triggered by the same or by separate events).

Further, in various embodiments, the one or more transmission parameters are one or more of or relate to one or more of:
- a hybrid-automatic repeat request processes identifier;
- a physical layer priority;
- a number of multiple-input multiple-output layers;
- a used modulation and coding scheme table;
- a cell-radio network temporary identifier and/or a modulation and coding scheme-radio network temporary identifier;
- a downlink control information format;
- a parameter associated to a physical downlink control channel scheduling a physical downlink shared channel, e.g. physical downlink control channel aggregation level or a core set where a physical downlink control channel is detected;
- one or more transport block sizes;
- one or more modulation and coding scheme indexes;
- a number of repetitions;
- physical downlink shared channel to hybrid automatic repeat request timing;
- physical downlink shared channel without a corresponding physical downlink control channel or semi-persistent scheduled physical downlink shared channels;
- a semi-persistent scheduling configuration;
- one or more physical uplink control channel resources or physical uplink control channel resource sets;
- one or more quality of service parameters; or
- any other parameter associated with physical downlink shared channel.

Some example embodiments will now be described with reference to the accompanying drawings. It is to be understood, however, that the drawings are designed solely for purposes of illustration and only serve as non-limiting examples. It should be further understood that the drawings are not drawn to scale and that they are merely intended to conceptually illustrate the structures and procedures described herein.

### BRIEF DESCRIPTION OF THE FIGURES

It is shown in:
- Fig. 1: a schematic diagram of a system according to an example embodiment;
- Fig. 2: a flowchart showing an example embodiment of the method according to the first example aspect;
- Fig. 3: a flowchart showing another example embodiment of the method according to the first example aspect;
- Fig. 4: a flowchart showing a further example embodiment of the method according to the first example aspect;
- Fig. 5: a flowchart showing an example embodiment of the method according to the second example aspect;
- Fig. 6: transmissions and actions performed by a first and a second apparatus according to the claimed invention;
- Fig. 7: example transmissions in an example communication network;
- Fig. 8: example transmissions and example actions performed by a first and a second apparatus according to example embodiments of the first or second example aspect, e.g. in the example communication network;
- Fig. 9: a schematic block diagram of an apparatus according to an example embodiment of the first example aspect;
- Fig. 10: a schematic block diagram of an apparatus according to an example embodiment of the second example aspect.

### DETAILED DESCRIPTION OF EXAMPLE EMBODIMENTS

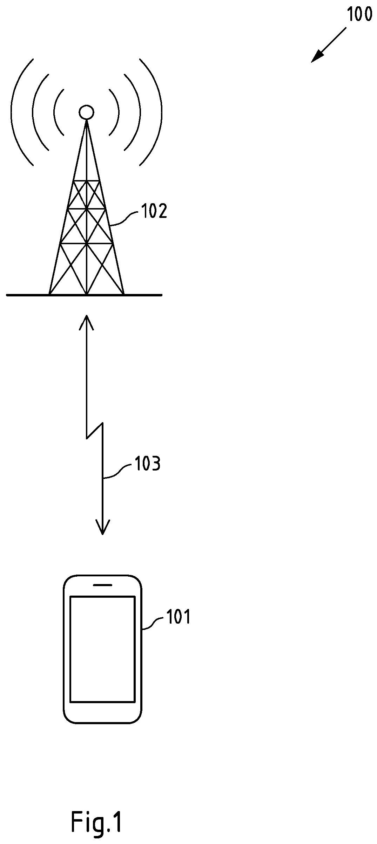

Fig. 1 shows a schematic diagram of a system 100 according to an example embodiment. The system 100 comprises a first apparatus 101 and a second apparatus 102. In the present example embodiment, the first apparatus 101 is a cell phone and the second apparatus 102 is a base station. However, the cell phone is merely an example for a first apparatus 101 according to the first example aspect. The first apparatus 101 may be embodied differently, e.g. as a car. Similarly, the base station is merely an example for a second apparatus 102.

The cell phone may for instance be a cell phone of a user. It may comprise a user interface like as a touch screen and a communication interface like a radio unit. The cell phone may communicate with, e.g. transmit data to and/or receive data from, the base station, e.g. using a wireless link 103. However, the cell phone may additionally be configured to communicate with other apparatuses, e.g. using various communication standards such as for instance a standard from the IEEE 802.11 standards series.

In the present example embodiment, the system 100 is part of a cellular communication network, in particular a 5G NR network. The network may for instance support IIoT or e.g. low latency services, e.g. URLLC services. The cell phone may be a UE of the network and the base station may be a gNB. If the system 100 was additionally or alternatively part of another network, e.g. an LTE network, the cell phone could be a UE of that network and the base station could be an eNB of that network.

As described above, transmissions between the first apparatus 101 and the second apparatus 102, e.g. from the first apparatus 101 to the second apparatus 102 and the other way around, may be done using a wireless link 103. In various embodiments, for instance if the system 100 is part of a cellular communication network, the transmissions may be done using various channels, such as transport channels or control channels. Examples for transport channels are a Downlink Shared Channel (DL-SCH), a Paging Channel (PCH), a Broadcast Channel (BCH) or an Uplink Shared Channel (UL-SCH), an example for a control channel is the physical downlink control channel (PDCCH). An example for a transmission may be the payload transmitted on a PDCCH which may be referred to as Downlink Control Information (DCI) to which for instance a 24-bit CRC may be attached to detect transmission errors.

However, it is emphasized again that this detailed embodiment is only an example. The system 100 comprising the first apparatus 101, the second apparatus 102 and the wireless link 103 may additionally or alternatively be part of a different network, like a low-power wide-area network, a network according to a standard from the IEEE 802.11 standards series, or a different cellular communication network, like LTE. Accordingly, in various embodiments, the first apparatus 101, the second apparatus 102 and the wireless link 103 may or may not be embodied as described for the present example embodiment above.

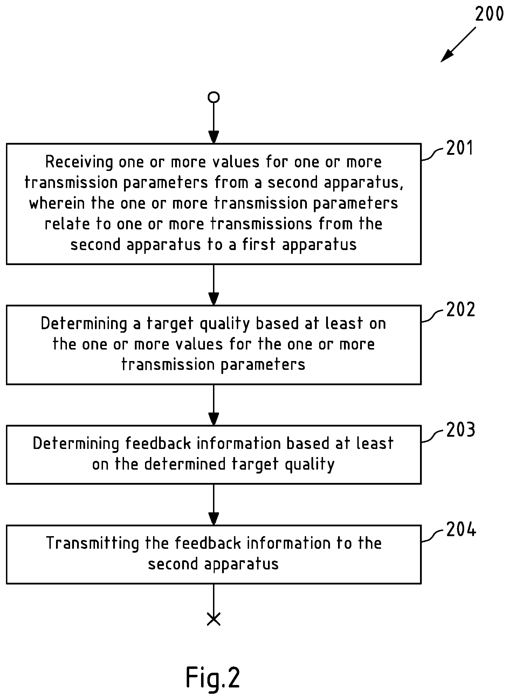

Fig. 2 shows a flowchart 200 showing an example embodiment of the method according to the first example aspect which is for instance performed by a first apparatus 101.

Step 201 comprises receiving one or more values for one or more transmission parameters from a second apparatus 102, wherein the one or more transmission parameters relate to one or more transmissions from the second apparatus 102 to a first apparatus 101. The one or more values for the one or more transmission parameters may be comprised in a transmission, e.g. a transmitted message, from a second apparatus 102 to the first apparatus 101, for instance DCI, as explained in the example embodiment of system 100. The DCI may be used to schedule a transmission, e.g. in PDSCH. This way, the one or more transmission parameters and their one or more values may for instance be associated with that channel, e.g. PDSCH. However, the one or more values for the one or more transmission parameters may also be distributed over multiple transmissions, e.g. transmitted messages, from the second apparatus 102 to the first apparatus 101. Further, the one or more values for the one or more transmission parameters may correspond to all or a subset of a plurality of values for transmission parameters that are received from the second apparatus 102 in step 201. Thus, the apparatus performing step 201 may be configured to detect whether it received one or more values for one or more transmission parameters which are, e.g. eligible to be, associated with a target quality such that a target quality is determinable based on the one or more transmission parameters.

Step 202 comprises determining a target quality based at least on the one or more values for the one or more transmission parameters. Step 202 may be performed after step 201 and/or it may be triggered by step 201. Step 201 may also be necessary condition for step 202 to be performed.

In various embodiments, the one or more values for the one or more transmission parameters are transmitted from the second apparatus 102 and received by the first apparatus 101 comprised in a message, e.g. for instance using a field of one or more bits per value for a transmission parameter. In some embodiments, the size and/or number of such fields may be the same for transmitting one or more values for one or more transmission parameters regardless whether a target quality can be determined based on the one or more values for the one or more transmission parameters. As an example, let us consider a message comprising two parameters, A and B. For simplicity, we assume for this example that the message only comprises the two parameters A and B even though this may be different. As an example, parameter A may have a value of 0100 and parameter B may have a value of 1101. Thus, the message comprising A and B may comprise the bit sequence 01001101. The first apparatus 101 may receive the values for the transmission parameters A and B according to step 201. It may determine the values, e.g. 0100 and 1101, which may relate to information for receiving and/or decoding further transmissions. Additionally, it may determine the target quality according to step 202 from the two values for the two transmission parameters A and B, e.g. using a mapping information. Thereby, in various embodiments, transmitting and/or receiving one or more values for one or more transmission parameters based on which the first apparatus 101 can determine the target quality does not, e.g. directly, increase the number of bits and/or fields transmitted as compared to the case of transmitting and/or receiving one or more values for the one or more transmission parameters based on which the first apparatus 101 cannot determine a target quality.

Step 203 comprises determining feedback information based at least on the determined target quality. The determining may be further based on a mapping information that was, e.g. received from the second apparatus 102 or that is predefined. Step 203 may be performed after step 202 and/or it may be triggered by the end of step 202. Completion of step 201 and/or step 202 may also be a necessary condition for step 203 to be performed.

Step 204 comprises transmitting the feedback information to the second apparatus 102. The way the feedback information is transmitted may have been configured by the second apparatus 102 before the feedback information is determined, e.g. via a message. This configuration may have predefined when the feedback information is to be transmitted, e.g. absolute or relative to another message, to the second apparatus 102 and how the feedback information is transmitted, e.g. in what format and/or comprised in what type of message.

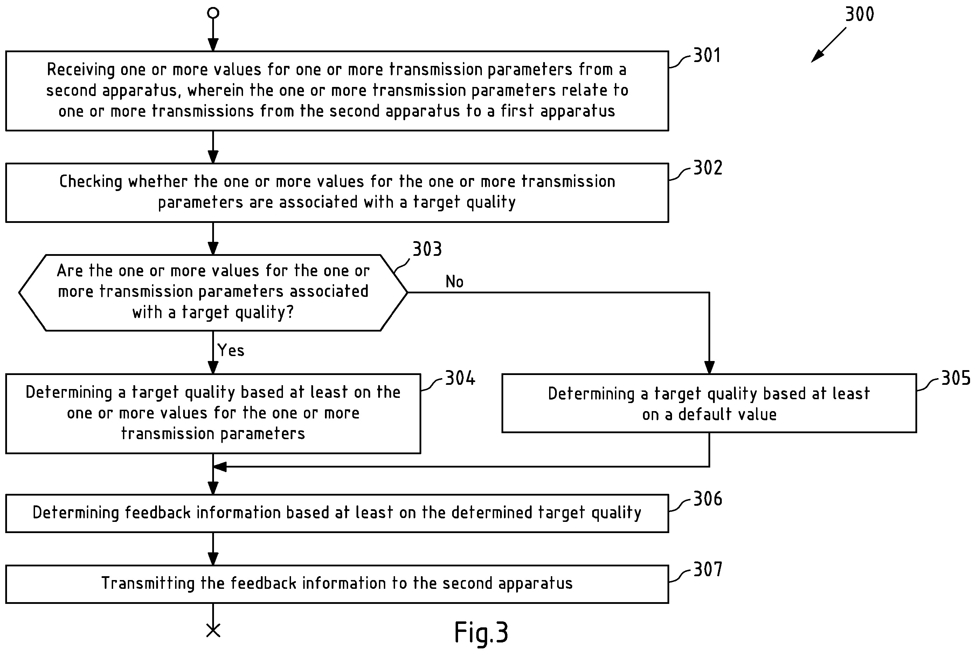

Fig. 3 shows a flowchart 300 showing another example embodiment of the method according to the first example aspect which is for instance performed by a first apparatus 101.

Step 301 resembles step 201 and what was described with regard to step 201 also applies to step 301. However, in various embodiments, the one or more values for the one or more transmission parameters are not always, e.g. in a temporal or structural sense, associated with a target quality. For instance, a transmission parameter may, e.g. according to a predefined configuration, structurally not be associated with a target quality such that, regardless of the value for this transmission parameter, a target quality cannot be determined based on a value for this transmission parameter. In another example, a value for a transmission parameter may sometimes be associated with a target quality and sometimes not.

Therefore, step 302 comprises checking whether the one or more values for the one or more transmission parameters are associated with a target quality. This may for instance be done based on information, e.g. a predetermined configuration and/or previously received information.

If the one or more values for the one or more transmission parameters are associated with a target quality (303: yes), step 304 is performed. Step 304 is similar to step 202 explained above.

On the other hand, if the one or more values for the one or more transmission parameters are not associated with a target quality (303: no), step 305 is performed. Step 305 comprises determining a target quality based at least on a default value. The default value may be based on a predetermined configuration. Additionally or alternatively, the default value may be based on previously received information. In various embodiments, the default value may be determined according to a predefined rule.

It is further disclosed that the first apparatus 101 and the second apparatus 102 may try to keep a common understanding on an assumed target quality, e.g. by implementation means. For instance, in the context of a cellular network like 5G NR, the second apparatus 102 may consider a fixed target quality, e.g. BLER target, when it is scheduling the first apparatus 101 with TB repetition and another fixed target quality when it is scheduling the first apparatus 101 with a single-shot transmission.

Steps 306 and 307 are similar to steps 203 and 204, respectively. Thus, the description regarding steps 203 and 204 also applies to steps 306 and 307, respectively.

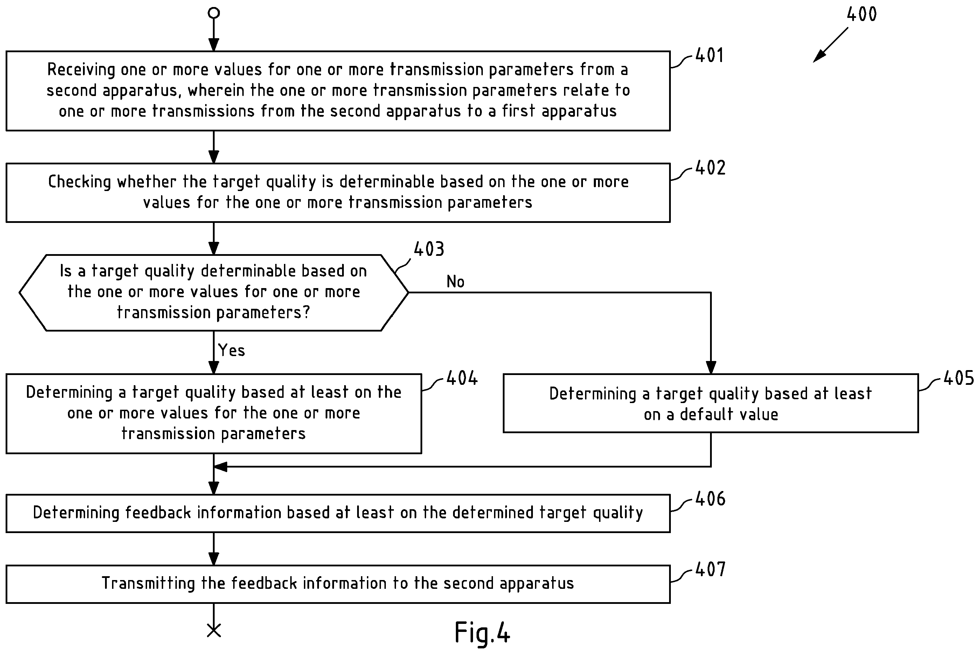

Fig. 4 shows a flowchart 400 showing a further example embodiment of the method according to the first example aspect which is for instance performed by a first apparatus 101.

Step 401 may be similar to step 201 described with respect to flowchart 200. However, in various embodiments and/or under various circumstances, it may occur that the one or more transmission parameters are associated with a target quality, e.g. a target quality would be derivable based on one or more values for these transmission parameters, but the first apparatus 101 performing the flowchart 400 cannot determine the target quality based on the one or more values for the one or more transmission parameters. An example reason for this could be that a mapping information and/or other predetermined information for use in determining the target quality based at least on the one or more values for the one or more transmission parameters has not yet been received by the first apparatus 101.

Therefore, step 402 comprises checking whether the target quality is determinable based on the one or more values for the one or more transmission parameters. The checking may comprise, for instance, checking whether a, e.g. suited and/or valid, mapping information for use in determining the target quality based on the one or more values for the one or more transmission parameters is accessible and/or available.

If the checking is positive, i.e. if the target quality is determinable based on the one or more values for the one or more transmission parameters (403: yes), step 404 is performed. Step 404 is similar to step 202 explained above.

If the checking is negative, i.e. if the target quality is not determinable based on the one or more values for the one or more transmission parameters (403: no), step 405 is performed. Step 405 is similar to step 305 explained above and the corresponding explanations apply here.

In various embodiments steps of the flowchart 300 and steps of the flowchart 400 may be combined. Thus, there may for instance be a method comprising checking whether the one or more values for the one or more transmission parameters are associated with a target quality, as in steps 302-303, and checking whether the target quality is determinable based on the one or more values for the one or more transmission parameters, as in steps 402-403. If the checking in steps 302-303 is negative, the target quality may be determined based at least on a first default value, whereas if the checking in steps 402-403 is negative, the target quality may be determined based at least on a second default value. The first and the second default value may or may not be the same default value and/or may or may not be determined according to a predefined rule. For example only when the checking according to steps 302-303 and according to steps 402-403 is positive, the target quality is determined based at least on the one or more values for the one or more transmission parameters.

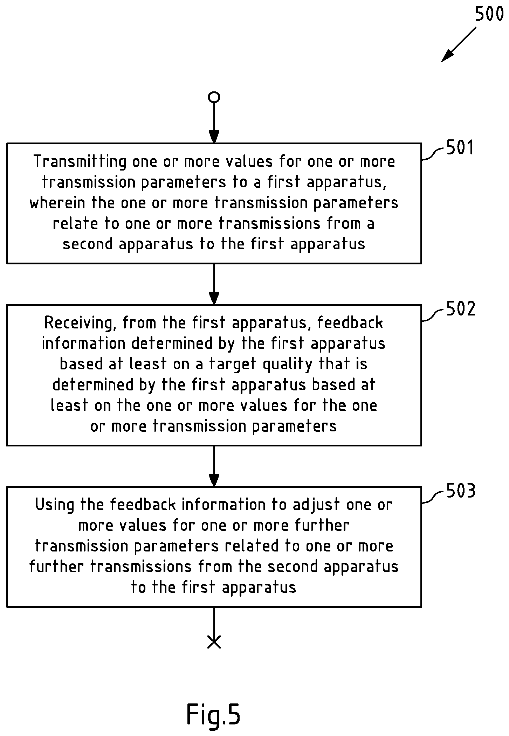

Fig. 5 shows a flowchart 500 showing an example embodiment of the method according to the second example aspect which may for instance be performed by a second apparatus 102.

Step 501 comprises transmitting one or more values for one or more transmission parameters to a first apparatus 101, wherein the one or more transmission parameters relate to one or more transmissions from a second apparatus 102 to the first apparatus 101. Step 501 may be performed to schedule one or more transmissions from the second apparatus 102 to the first apparatus 101, e.g. using DCI information. It may be performed for instance after the second apparatus 102 has configured the first apparatus 101 to report, e.g. transmit to the second apparatus 102, feedback information. The feedback information may be based at least on a target quality that the first apparatus 101 may determine based on the one or more values for the one or more transmission parameters that it receives from the second apparatus 102 in step 501. The target quality may also be known to the second apparatus 102, e.g. because the second apparatus 102 configured, e.g. determined, the target quality.

Step 502 comprises receiving, from the first apparatus 101, feedback information determined by the first apparatus 101 based at least on a target quality determined by the first apparatus 101 based at least on the one or more values for the one or more transmission parameters, for instance at a predetermined time and/or with a predetermined message, wherein the predetermining may have been done by the second apparatus 102 and communicated to the first apparatus 101.

Step 503 comprises using the feedback information to adjust one or more values for one or more further transmission parameters related to one or more further transmissions from the second apparatus 102 to the first apparatus 101. This step may for instance be triggered by step 502. In various embodiments, further pieces of information may be used to adjust the one or more values, e.g. a mapping information.

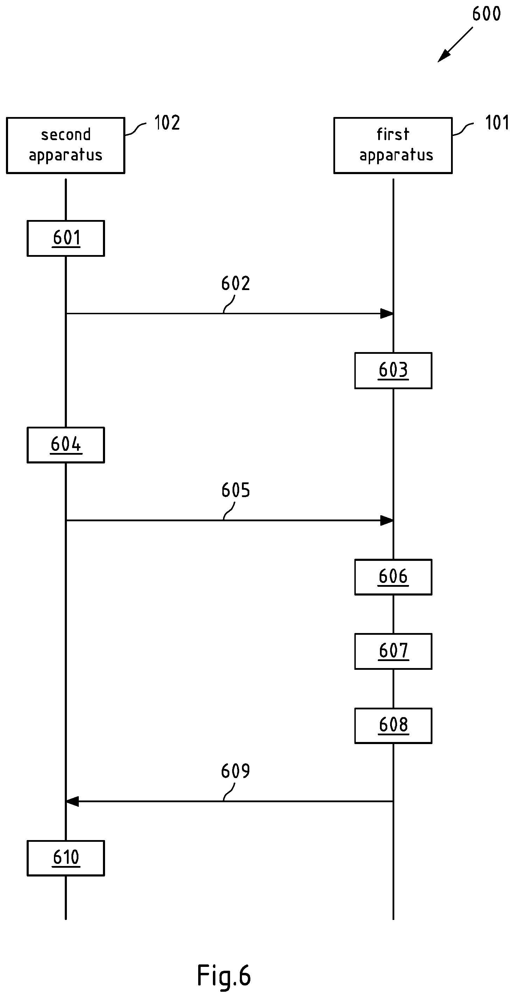

Fig. 6 shows transmissions and actions 600 performed by a first apparatus 101 and a second apparatus 102 according to the claimed invention.

According to the claimed invention, in step 601 the second apparatus 102 configures or stores a mapping information. The mapping information provides a mapping between different values of one or more transmission parameters and respective different target qualities. The mapping information may be individualized and, e.g. only, valid for the first apparatus 101 or it may be valid for various first apparatuses, e.g. in the same cell. In the present example, the mapping information comprises a table that lists the one or more transmission parameters. For various values or value ranges of the one or more transmission parameters, the table indicates a respective target quality. In the present example embodiment, the mapping information further comprises predetermined rules to determine the target quality.

In step 602 the second apparatus 102 transmits the mapping information, i.e. the table in the present example embodiment, to the first apparatus 101. In the present example embodiment, this is done as a setup step, e.g. when the first apparatus 101 first connects to the second apparatus 102. So in the present example embodiment, this transmission is directed only to the first apparatus 101 and for instance not to further first apparatuses. However, in other embodiments the transmission may for instance be directed to various first apparatuses, e.g. in a broadcast transmission. Further in step 602, the second apparatus 102 configures the first apparatus 101 to report feedback information.

Still in step 602, the first apparatus 101 receives the mapping information and then stores it in step 603, for instance until the first apparatus 101 receives a trigger to remove it or until a validity period ends or an expiry time and/or date is passed.

After that, before that or even substantially at the same time, the second apparatus 102 configures a target quality in step 604. In the present example embodiment, the second apparatus 102 configures the target quality after having transmitted the mapping information in step 602. However, in other embodiments, the second apparatus 102 may first configure the target quality and then determine and transmit the mapping information to inform the first apparatus 101 about the mapping. The target quality may be a target BLER that relates to one or more transmissions that the first apparatus 101 may perform to the second apparatus 102.

After configuring the target quality in step 604, the second apparatus 102 transmits one or more values for one or more transmission parameters to the first apparatus 101 in step 605. If this embodiment is performed for example in a cellular network environment, the transmission may for instance be done using a physical channel, e.g. PDCCH. The one or more transmission parameters are one or more of those transmission parameters for whose values a mapping to respective target qualities is provided in the mapping information. Furthermore, in this example embodiment, the one or more transmission parameters are part of control information used for scheduling one or more transmissions from the second apparatus 102 to the first apparatus 101. The scheduled one or more transmissions may then also be transmitted in step 605, e.g. in PDSCH, such that the first apparatus 101 receives the one or more transmissions to which the one or more transmission parameters and the target quality relate.

According to the claimed invention, in step 606 the first apparatus 101 determines the target quality based at least on the one or more values for the one or more transmission parameters received in step 605 using the mapping information received and stored in steps 602-603.

Step 607 may happen after the previously described steps 601 to 606. However, in various embodiments, in may also happen somewhere in between those steps or before those steps.

Step 607 comprises estimating a quality of the one or more received transmissions, e.g. in PDSCH. This step may comprise measuring and/or using a measured quality of the one or more received transmissions. The metric used for representing the measured quality and/or the estimated quality may respectively be the same as a metric used for representing the target quality. However, this is not necessarily the case and the measured quality and/or the estimated quality and/or the target quality could relate to or be based on different quality metrics.

In step 608 the first apparatus 101 determines a feedback information based at least on the target quality determined in step 606. Moreover, in this embodiment, the first apparatus 101 determines the feedback further based at least on the estimated quality of step 607. For instance, the first apparatus 101 may determine how one or more values for one or more transmission parameters could be changed at the second apparatus 102 so that the estimated quality of one or more potential transmissions that could be received approaches the target quality. For instance to this end, the feedback information is a delta information in this example embodiment, i.e. an information specifying a difference between a current value of a transmission parameter and a desired value for the parameter. If this embodiment is performed for example in a cellular network environment, the feedback information may for instance be a delta-MCS.

In the present example embodiment, the feedback information has a predefined format which the first apparatus 101 and the second apparatus 102 both can process. Using this predefined format, the first apparatus 101 transmits the feedback information to the second apparatus 102 in step 609.

According to the claimed invention, the second apparatus 102 receives the feedback information determined by the first apparatus, e.g. as described in steps 606, 607, and 608, and uses the feedback information to adjust one or more values for one or more further transmission parameters related to or associated with one or more further transmissions from the second apparatus 102 to the first apparatus 101 in step 610. For instance, if this embodiment is performed in a cellular network environment, the second apparatus 102 may change the MCS selection for upcoming transmissions based on the received delta-MCS, e.g possibly including the OLLA offset.

For example after step 610, the second apparatus 102 may make one or more transmissions for the first apparatus 101 using the adjusted one or more values for the one or more transmission parameters. If this embodiment is performed for example in a cellular network environment, these one or more transmissions may for instance be transmissions of TBs in e.g. transport channels.

One or more of the steps 601 to 610 described above may be repeated. However, it is not required that all steps shown in Fig. 6 are repeated. For example, one or more steps of steps 604-610 may be performed more often than one or more steps of steps 601 to 603. In various embodiments, steps described above may be omitted.

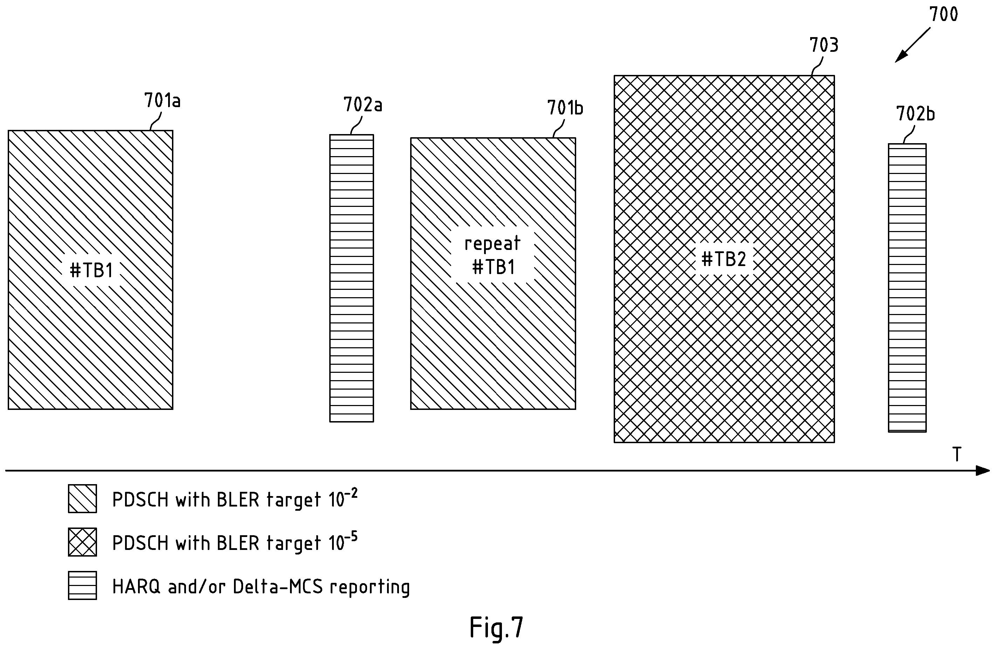

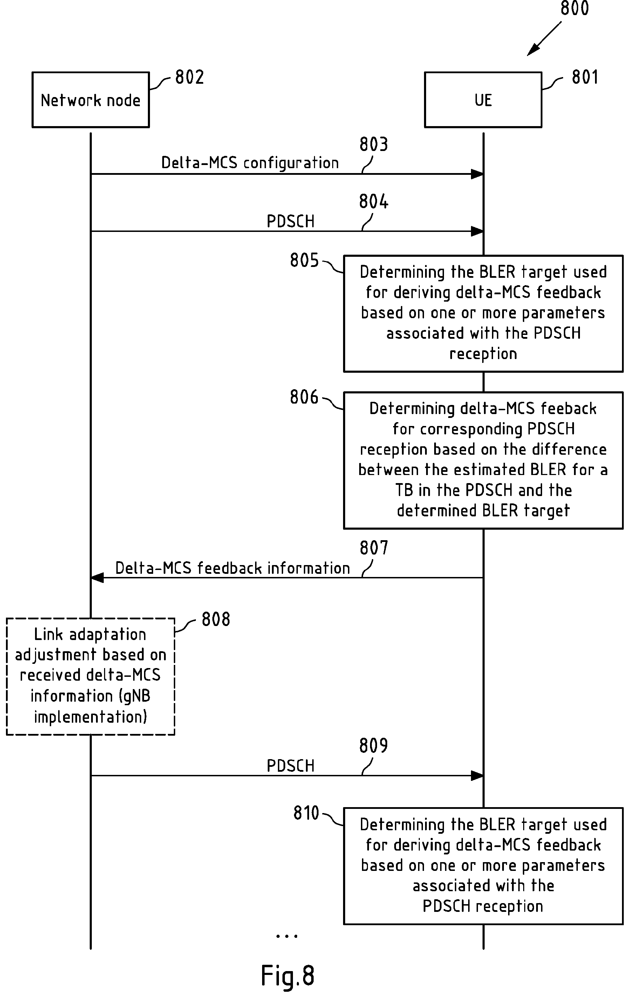

In the following, Figs. 7 and 8 relating to a detailed example embodiment in the context of an example mobile communication network, e.g. based on 5G NR, are described. In this example embodiment, a UE is an example of a first apparatus 101. Further, a network node, in particular a gNB, is an example of a second apparatus 102, and a BLER target is an example for a target quality. However, it is emphasized that the embodiment serves only as an example and single or multiple characteristics and/or steps described therein may also be used in other contexts.

Fig. 7 shows example transmissions 700 in an example communication network, e.g. the example communication network outlined above. It thereby illustrates how a gNB, being an example of a second apparatus 102, may configure a BLER target.

Fig. 7 shows a first transport block 701a and a repetition of the first transport block 701b. Further, Fig. 7 shows a second transport block 703. The transport blocks 701a, 701b and 703 may respectively be transmissions from the gNB to the UE, e.g. using the PDSCH. Additionally, Fig. 7 shows two transmissions 702a, 702b relating to HARQ and/or delta-MCS reporting.

A gNB may schedule the second transport block 703, e.g. with a single-shot transmission. The service requirement of the second transport block 703 BLER at the physical layer may for instance be 10⁻⁵. Thus, the scheduler, e.g. of the gNB, may determine, e.g. select, a MCS and/or resource allocation, in particular for the transmission, to meet the required BLER target.

However, additionally or alternatively, the same UE may be scheduled with a multi-shot TB transmission, where the BLER target for initial or subsequent transmissions may be different from 10⁻⁵, e.g. higher, e.g. 10⁻². The first transport blocks 701a, 701b may be examples for such multi-shot TB transmissions. Thus, the BLER targets for different TBs 701a, 702a, 703 or repetitions of the same TB 701a, 701b may be changing, e.g. over time. So the gNB may adjust its transmission parameters, e.g. MCS and/or resource allocation, accordingly to meet the respective BLER target. Therefore, in various scenarios, the BLER target may be applicable to, e.g. taken into account by, the gNB scheduling, whereas for instance in various situations the BLER target is not known at the UE.

It will now be described how the example embodiments according to the first and/or second example aspects may be used in the context of the above-described communication network. However, the example embodiment described in the following may also be used in other contexts.

In the communication network according to the present example embodiment, there may be a channel state information (CSI) reporting framework. Therein, CSI is information reported by a device, e.g. a UE, to a gNB. As described before, the UE is an example for a first apparatus 101 and the gNB is an example for a second apparatus 102.

The CSI reporting framework may support different types, including periodic, semi-persistent, and aperiodic CSI reporting. Aperiodic CSI reporting may be, e.g. limited to be, reported on PUSCH and may be triggered by trigger state indication in the CSI request field of an UL grant DCI. Multiple CSI reporting quantities may be supported and can be listed as follows, 'none', 'cri-RI-PMI-CQI', 'cri-RI-i1', 'cri-RI-i1-CQI', 'cri-RI-CQI', 'cri-RSRP', 'cri-SINR', 'ssb-Index-RSRP', 'ssb-Index-SINR' or 'cri-RI-LI-PMI-CQI'. For PMI reporting multiple codebooks may be supported including type I, type II, type II port selection, enhanced type II and enhanced type II port selection. For CQI, both wide-band CQI and sub-band CQI formats may be supported. In various embodiments, CSI reporting may be done taking into consideration UL/DL partial reciprocity, CSI reporting for multi-TRP and CSI adjustments for IoT and URLLC. For instance in this context (but also in other contexts), CSI feedback may be used in determining an MCS.

In the present example embodiment, such a CSI feedback is an example for information comprising a feedback information. However, this may also be so in various other embodiments.

CSI quantities/CSI quantity formats that may be used may be quantities computed based on channel and/or interference measurements and/or quantities computed based on PDSCH decoding. An example CSI quantity may be delta-MCS, e.g. for a TB. As explained before, delta-MCS may be calculated from the difference between *I_{MCS_tgt}* and *I_{MCS},* where *I_{MCS_tgt}* may be the largest MCS index such that an estimated BLER for a TB received with this MCS index would be smaller than or equal to a BLER target, and *I_{MCS}* may be the MCS index of a received TB. Such a delta-MCS is an example of a feedback information. Further, as described above, the BLER target is an example for a target quality. Again, both or either of this may also be the case in various other embodiments and especially not only in context of CSI reporting.

An example embodiment of using a feedback information to adjust one or more values for one or more further transmission parameters related to one or more further transmissions from the second apparatus 102 to the first apparatus 101 may be that the gNB implements for instance a scheme, e.g. an OLLA scheme, using the delta-MCS to fine tune the MCS selection, e.g. for, e.g. approximately, maintaining a BLER target. The delta-MCS may be considered to be a soft feedback which is up to UE implementation, i.e. an example embodiment for a feedback information which is determined by a first apparatus 101. With soft feedback, e.g. adaptive feedback and/or feedback which is up to UE implementation, like delta-MCS from the UE, gNB may fine tune OLLA offset, which may in various embodiments give suited MCS decisions for the upcoming (initial) transmissions. Moreover, the selection of MCS may be adjusted even if decoding of the previous transmissions/TB was successful, but the decoding margin was too narrow compared to BLERtarget.

So the UE may use the BLER target to compare the estimated BLER with the BLER target, e.g. to determine, e.g. derive, *I_{MCS_tgt},* which may for instance be the largest MCS index such that estimated BLER of a TB received with this MCS index would be smaller than or equal to a BLER target. To that end, the BLER target may be determined, e.g. derived, in various ways.

First, in various scenarios, BLER target may be assumed to be a fixed, e.g. static, value, e.g. 10⁻², 10⁻⁵, by the UE, for instance to derive *I_{MCS_tgt}* and/or delta-MCS. However, scheduled TBs may have a wide range of BLER targets. So for instance in these scenarios, delta-MCS feedback may need to cover a wide range, e.g. of possible values, to represent the difference between *I*_{MCS_tgt} and I_{MCS} as the difference between target BLER and estimated BLER may be high. For instance, if the target BLER is assumed to be 10⁻⁵, but the gNB schedules a TB with a target BLER of 10⁻², the estimated BLER may be in the range of 10⁻² and a desired MCS may be required to correspond to a very low SE value entry in the MCS table, which may not be within the range specified for delta-MCS reporting. Furthermore, in various scenarios where the BLER target is assumed to be a fixed value, the delta-MCS received at the gNB may not be used at the gNB, for instance when the UE determines, e.g. suggests, a delta-MCS to reach for instance a BLER target of 10⁻⁵, while gNB may for instance require a delta-MCS for the BLER target 10⁻². Moreover, the gNB may need to have information about UE decoding methods for determining, e.g. deriving, delta-MCS for a BLER target 10⁻² based on a received delta-MCS for a BLER target 10⁻⁵ and/or gNB may need to maintain a set of look-up tables concerning e.g. the UE decoding methods of respective multiple UEs.

Second, a target BLER may be indicated, e.g. from a gNB to a UE, by the DCI or MAC-CE, e.g. in a dynamic manner, e.g. using a predefined and/or especially assigned, allocated and/or reserved field, e.g. in a message, for representing a target BLER.

Third, in various scenarios, the UE may not use a mapping information, e.g. a configured or pre-defined mapping; between one or more parameters and/or their values associated with PDSCH, and a target quality, e.g. a BLER target. Instead, a UE may derive a BLER target, e.g. a fitting BLER target, from a set of BLER targets. In such situations, the derived BLER target may be indicated, e.g. from the UE to the gNB, with the feedback information, e.g. delta-MCS. Alternatively,the derived BLERtarget may not be reported, e.g. from the UE to the gNB. Instead, the UE and gNB may try to keep a common understanding on the assumed, e.g. derived, BLER targets by implementation means. Thus, UE and gNB may follow similar methods to try and determine the, e.g. same, BLER target, e.g. locally, without indicating the BLER target to each other, e.g. directly, e.g. using a transmission. For instance, the gNB may consider a fixed BLER target when it is scheduling the UE with TB repetition (see for instance blocks 701a and 701b in Fig. 7) and another fixed BLER target when it is scheduling the UE with a single-shot transmission (see for instance block 703 in Fig. 7).

Fourth, in various embodiments, the UE may determine the BLER target based on one or more values for one or more transmission parameters that are received from the gNB, as described in the following with reference to Fig. 8.

Fig. 8 shows example transmissions and example actions 800 performed by a first apparatus 101 and a second apparatus 102 according to example embodiments of the first or second example aspect, e.g. in the example communication network described above.

The network node 802 may be for instance a gNB and is an example for a second apparatus 102. The UE 801 is an example for a first apparatus 101.

First, the gNB 802 configures the UE 801 to report delta-MCS configuration in step 803, including the rules to determine the associated BLER target for each PDSCH reception. Additional configuration information may also be included as part of the delta-MCS configuration, e.g. the reporting behaviour of the delta-MCS feedback in UL (whether its reported together with corresponding HARQ-ACK information of PDSCH or periodically as a complement to existing CSI reporting; see e.g. transmissions 702a and/or 702b in Fig. 7). Step 803 may be considered to be a more detailed example embodiment of steps 601 and 602.

Next, when, e.g. once and/or after, a PDSCH is received in step 804, the UE 801 proceeds to determine the associated BLER target for the PDSCH reception in step 805, e.g. based on the HARQ process ID or other parameters, e.g. of the received PDSCH. Steps 804 and 805 may be considered to be more detailed example embodiments steps 605 and 606, respectively, the delta-MCS feedback being an example of a feedback information and the BLER target being an example of a target quality.

Such BLER target may be used to determine, e.g. derive, the delta-MCS feedback in step 806 where the delta-MCS feedback may be calculated from the difference between *I_{MCS_tgt}* and *I_{MCS},* where *I_{MCS_tgt}* may be the largest MCS index such that the estimated BLER for a TB received with this MCS index would be smaller than or equal to the determined BLER target, and where *I_{MCS}* may be the MCS index of the received TB. The means to determine the delta-MCS may be for instance up to UE 801 implementation, comprising e.g. using SINR, LLR, raw BER, flipped bits, LDPC iterations, BLEP, number failed parity checks or similar means and/or quantities. Step 806 may be considered to be a more detailed example embodiment of steps 607 and 608.

Finally, the UE 801 may report such delta-MCS feedback to the gNB 802 e.g. in a physical uplink control channel (PUCCH) in step 807. Step 807 may be considered to be a more detailed example embodiment of step 609.

Such delta-MCS information may be used by the gNB 802 to adjust the MCS for future transmissions in step 808, e.g. adjusting the OLLA offset based on the decoding margin of the previous TB successfully transmitted (ACK). Step 808 may be considered to be a more detailed example embodiment of step 610.

Various steps of the steps described above may be repeated, as for example shown in Fig. 8 with steps 809 and 810. These steps 809 and 810 may be similar to steps 804 and 805, respectively. Further steps that are similar to steps 806, 807, and 808 may follow.

A detailed example implementation of the example embodiment of Fig. 8 may be as described in the following.

The gNB 802 may configure a BLER target of 1E-2 (1%) for a set of HARQ processes, e.g. HARQ process IDs 1 to 6, and another BLER target of 1E-5 for another set of HARQ processes, e.g. 7 to 10. With respect to the example transmissions 700 in Fig. 7, for data that requires delivery in a very short time, e.g. <1 ms (due to short packet delay budget (PDB) or due to queuing delay in the gNB 802buffers), the gNB 802 may select an MCS for the PDSCH that targets, e.g. approximately, for instance 1E-5 error probability, for instance for the second transport block 703 in Fig. 7, and such PDSCH is transmitted on an available HARQ process in the range 7-10. The received delta-MCS information from the UE 801 may be used by the gNB 802 to adjust the MCS for future transmissions, e.g. to the UE 801, targeting around 1E-5 error probability.

Next, for another packet with more relaxed delivery timeline, e.g. 2 ms, the gNB 802 may select a higher MCS for the PDSCH transmission, e.g. for the first transport block 701a, to target an error probability of 1E-2 (since the 2 ms delay budget may allow in various scenarios for one or more HARQ retransmissions in case the initial transmission is not correctly decoded by the UE 801). Such PDSCH may be transmitted on an available HARQ process in the range 1-6. The received delta-MCS information from the UE 801 may be used by the gNB 802 to adjust the MCS for future transmissions, e.g. to the UE, targeting more relaxed, e.g. around 1E-2, error probability.

Example contents, e.g. one or more transmission parameters, of an example RRC configuration message for the BLER target configuration are depicted below.

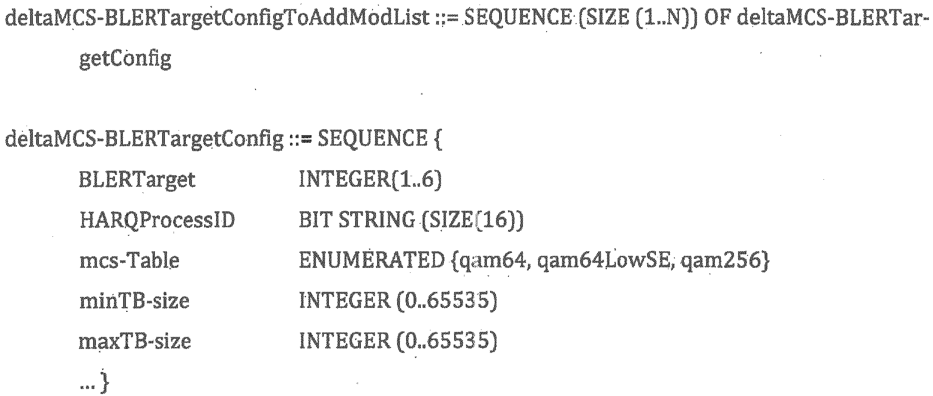

As BLERTarget, 1 may correspond to 1E-1, 2 may correspond to 1E-2, and so on. The other transmission parameters, especially the example transmission parameters HARQProcessID, mcs-Table, minTB-size, and maxTB-size may be optional parameters. In the HARQProcessID, 1 bit may be used per HARQ process ID (HPID). If a respective bit is set to a predetermined value, e.g. 1, this may indicate that such HPID is associated. Similarly, mcs-Table may indicate whether BLER target applies to PDSCHs scheduled with such an MCS table.

In various embodiments, the UE 801 may be configured with one or more sets of "deltaMCS-BLERTargetConfig", where one or more or each of the one or more sets may include a BLERTarget and/or the conditions that PDSCH, e.g. the one or more values for the one or more transmission parameters transmitted therein, shall fulfill in order to be associated with such BLERTarget. If multiple conditions are specified, e.g. HARQProcessID and maxTB-size, it could be further specified (or configured) whether they should be treated in an, e.g. logical, AND or OR fashion (e.g. the N specified conditions need to be fulfilled, or at least one of the N conditions need to be fulfilled or any combination of AND and OR connections of the N conditions need to be fulfilled).

The message described above may be an example for a transmission according to step 602 and/or step 803. Thus, a RRC configuration message or parts thereof may be an example information that corresponds to or comprises a mapping information that provides a mapping between different values of the one or more transmission parameters and respective target qualities.

A further example embodiment that may be performed in a context similar to that described above will now be described. However, the embodiment may also be performed in other contexts.

In the further embodiment, a target quality associated with a first physical channel may be determined using a target quality associated with a second, e.g. different, physical channel. So the target qualities of the first and the second channel may be coupled. So it may occur that a first apparatus 101 does not transmit feedback information to the second apparatus 102 for, e.g. transmissions in, the first and the second channel, but e.g. for either one of the first and the second channel.

More specifically, the BLERtarget for PDCCH itself may be derived from the BLERtarget of the PDSCH channel it points to. Then, the target BLER of PDCCH may be derived for instance by BLERtarget(PDCCH) = BLERtarget(PDSCH) / 10. In such an embodiment, it may occur that there is no separate "delta-MCS" reporting for PDCCH.

On the other hand, it may occur that the target quality associated with the first physical channel and the target quality associated with the second physical channel are determined separately by the first apparatus 101. The target quality associated with the first physical channel may be derived using a method according to the first example aspect and the associated with the second physical channel may as well be derived using a separate execution of the method according to the first example aspect (the embodiments of the method may be equal or different).

More specifically, for instance in the context of the example embodiment described above, separate reporting of the feedback information for PDCCH may be done, for instance using delta-AL-reporting (Aggregration Level). In such embodiments, the BLERtarget for delta-AL-reporting can be derived from one or more of the parameters described above so that PDCCH and PDSCH BLERtargets are separately derived and for instance thereby decoupled.

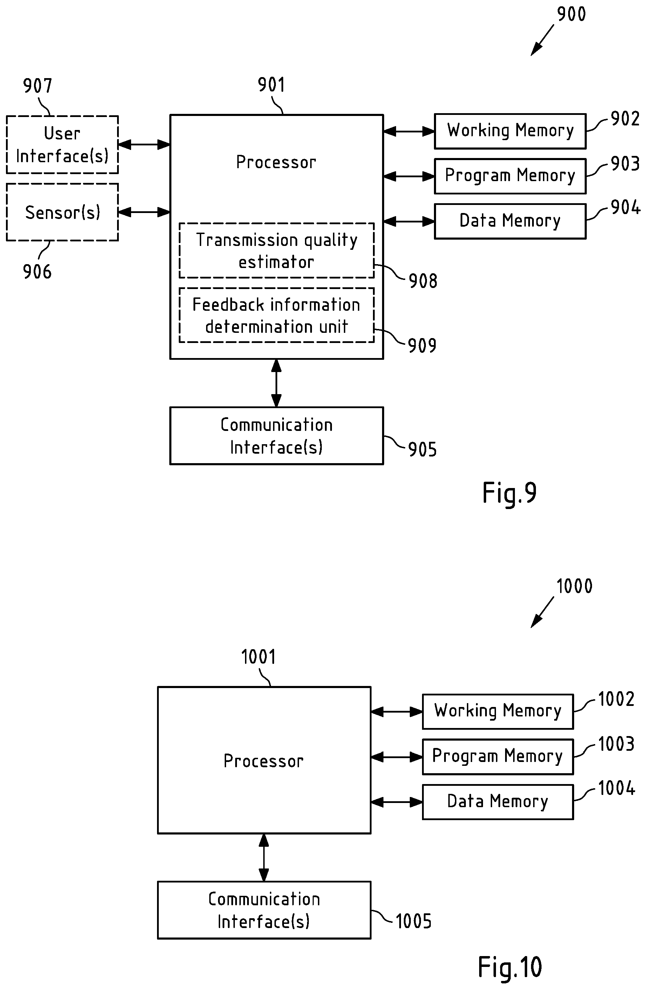

Fig. 9 shows a schematic block diagram of an apparatus according to an example embodiment of the first example aspect which may for instance represent the first apparatus 101.

Apparatus 900 comprises a processor 901, a working memory 902, a program memory 903, a data memory 904, communication interface(s) 905, optional sensor(s) 906 and an optional user interface 907. In various embodiments, the apparatus 900 comprises further units, parts or structural and/or functional elements. In various embodiments, apparatus 900 is a UE 801, e.g. a cell phone.

Apparatus 900 may for instance be configured to perform and/or control or comprise respective means (at least one of 901 to 907) for performing and/or controlling and/or configured to perform the method according to the first example aspect. Apparatus 900 may as well constitute an apparatus comprising at least one processor 901 and at least one memory 902 including computer program code, the at least one memory 902 and the computer program code configured to, with the at least one processor 901, cause an apparatus, e.g. apparatus 900 at least to perform and/or control the method according to the first example aspect.

Processor 901 may for instance further control the memories 902 to 904, the communication interface(s) 905, and the optional sensor(s) 906 and user interface 907.

Furthermore, processor 901 may for instance execute computer program code stored in program memory 903, which may for instance represent a computer readable storage medium comprising program code that, when executed by processor 901, causes the processor 901 to perform the method according to the first example aspect.

Processor 901 (and also any other processor mentioned in this specification) may be a processor of any suitable type. Processor 901 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware may be programmed in such a way to carry out the described function. Processor 901 may for instance be an application processor that runs an operating system.

Optionally, processor 901 may comprise a transmission quality estimator 908 as a functional and/or structural unit. The transmission quality estimator 908 may for instance be configured to estimate a transmission quality based on measurement data of transmissions, e.g. based on measured signal strength values and/or bit errors and/or block errors.

Further, processor 901 may optionally comprise a feedback information determination unit 909 as a functional and/or structural unit. The feedback information determination unit 909 may be configured to use SINR, LLR, raw BER, flipped bits, LDPC iterations, BLEP, number of fail parity checks, or similar means for determining a feedback information.

Program memory 903 may also be included into processor 901. This memory may for instance be fixedly connected to processor 901, or be at least partially removable from processor 901, for instance in the form of a memory card or stick. Program memory 903 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 903 may also comprise an operating system for processor 901. Program memory 903 may also comprise a firmware for apparatus 900.

Apparatus 900 comprises a working memory 902, for instance in the form of a volatile memory. It may for instance be a Random Access Memory (RAM) or Dynamic RAM (DRAM), to give but a few non-limiting examples. It may for instance be used by processor 901 when executing an operating system and/or computer program.

Data memory 904 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 904 may for instance store mapping information, one or more parameter values and/or first and/or second pieces of information, to name but a few non-limiting examples.

Communication interface(s) 905 enable apparatus 900 to communicate with other entities, e.g. the second apparatus 102 of Fig. 1, which may for instance be a base station, e.g. a gNB 802. The communication interface(s) 905 may for instance comprise a wireless interface, e.g. a cellular radio communication interface and/or a WLAN interface) and/or wire-bound interface, e.g. an IP-based interface, for instance to communicate with entities via the Internet.

Sensor(s) 906 are optional and may for instance comprise a gyroscope or a received signal strength sensor.

User interface 907 is optional and may comprise a display for displaying information to a user and/or an input device (e.g. a keyboard, keypad, touchpad, mouse, etc.) for receiving information from a user.

Some or all of the components of the apparatus 900 may for instance be connected via a bus. Some or all of the components of the apparatus 900 may for instance be combined into one or more modules.

Fig. 10 is a schematic block diagram of an apparatus 1000 according to the second example aspect. Apparatus 1000 may for instance represent the second apparatus 102.

Apparatus 1000 comprises a processor 1001, a working memory 1002, a program memory 1003, a data memory 1004, and communication interface(s) 1005. In various embodiments, the apparatus 1000 comprises further units, parts or structural and/or functional elements. In various embodiments, apparatus 1000 is a network node 802, e.g. a gNB.

Apparatus 1000 may for instance be configured to perform and/or control or comprise respective means (at least one of 1001 to 1007) for performing and/or controlling and/or configured to perform the method according to the second example aspect. Apparatus 1000 may as well constitute an apparatus comprising at least one processor 1001 and at least one memory 1001 including computer program code, the at least one memory 1001 and the computer program code configured to, with the at least one processor 1001, cause an apparatus, e.g. apparatus 1000 at least to perform and/or control the method according to the second example aspect.

Processor 1001 may for instance further control the memories 1002 to 1004, and/or the communication interface(s) 1005.

Processor 1001 may for instance execute computer program code stored in program memory 1003, which may for instance represent a computer readable storage medium comprising program code that, when executed by processor 1001, causes the processor 1001 to perform the method according to the second example aspect.

As described for processor 901, processor 1001 (and also any other processor mentioned in this specification) may be a processor of any suitable type. Processor 1001 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 1001 may for instance be an application processor that runs an operating system.

Program memory 1003 may also be included into processor 1001. This memory may for instance be fixedly connected to processor 1001, or be at least partially removable from processor 1001, for instance in the form of a memory card or stick. Program memory 1003 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 1003 may also comprise an operating system for processor 1001. Program memory 1003 may also comprise a firmware for apparatus 1000.

Apparatus 1000 comprises a working memory 1002, for instance in the form of a volatile memory. It may for instance be a Random Access Memory (RAM) or Dynamic RAM (DRAM), to give but a few non-limiting examples. It may for instance be used by processor 1001 when executing an operating system and/or computer program.

Data memory 1004 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 1004 may for instance store one or more target qualities, e.g. for respective transmissions and/or first apparatuses 101, one or more pieces of mapping information, and/or one or more transmission parameter values to name but a few non-limiting examples.

Communication interface(s) 1005 enable apparatus 1000 to communicate with other entities, e.g. with the first apparatus 101 of Fig. 1 and/or network nodes, e.g. of the same network. The communication interface(s) 1005 may for instance comprise a wireless interface, e.g. a cellular radio communication interface and/or a WLAN interface) and/or wire-bound interface, e.g. an IP-based interface, for instance to communicate with entities via the Internet or a network backbone, e.g. a 5G NR backbone.

Some or all of the components of the apparatus 1000 may for instance be connected via a bus. Some or all of the components of the apparatus 1000 may for instance be combined into one or more modules.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only examples, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program) may also be used in a corresponding manner in an example embodiment of any other category. It should also be understood that presence of a feature in the presented example embodiments shall not necessarily mean that this feature forms an essential feature which cannot be omitted or substituted.

The sequence of method steps presented above, e.g. in the flowcharts, is not mandatory, also alternative sequences may be possible. Nevertheless, the specific sequence of method steps exemplarily shown in the figures shall be considered as one possible sequence of method steps for the respective embodiment described by the respective figure. Further, in various embodiments, a step of a sequence may trigger another step of the sequence, for instance the following step in the sequence.

## Claims

1. A first apparatus (101) comprising means configured to perform:
- receiving and/or storing mapping information, wherein the mapping information provides a mapping between different values of one or more transmission parameters and different respective target qualities;
- receiving (201), from a second apparatus (102), one or more values for the one or more transmission parameters used for one or more transmissions from the second apparatus (102) to the first apparatus (101);
- determining (202) a target quality based at least on the one or more values for the one or more transmission parameters using the mapping information;
- determining (203) feedback information based at least on the determined target quality, the feedback information indicating how a value for a further transmission parameter that is associated with one or more further transmissions at the second apparatus (102) is to be adjusted to meet or approach the determined target quality; and
- transmitting (204) the feedback information to the second apparatus (102).

2. The first apparatus (101) of claim 1, wherein the means are further configured to perform:
- receiving the one or more transmissions; and
- estimating a quality of the one or more received transmissions, wherein the feedback information is determined further based at least on the estimated quality.

3. The first apparatus (101) of any preceding claim, wherein the feedback information is useable by the second apparatus (102) to adjust one or more values for one or more further transmission parameters, and wherein the one or more further transmission parameters relate to one or more further transmissions from the second apparatus (102) to the first apparatus (101).

4. The first apparatus (101) of claim 3, wherein the target quality is achievable by the one or more further transmissions with the so-adjusted one or more values for the one or more further transmission parameters.

5. The first apparatus (101) of any preceding claim, wherein the means are further configured to perform:
- checking whether the target quality is determinable based on the one or more values for the one or more transmission parameters.

6. A second apparatus (102) comprising means configured to perform:
- transmitting mapping information to a first apparatus (101) and/or storing mapping information, wherein the mapping information provides a mapping between different values of one or more transmission parameters and respective different target qualities;
- transmitting (501), to the first apparatus (101), one or more values for the one or more transmission parameters used for one or more transmissions from the second apparatus (102) to the first apparatus (101);
- receiving (502), from the first apparatus (101), feedback information determined by the first apparatus (101) based at least on a target quality that is determined by the first apparatus (101) based at least on the one or more values for the one or more transmission parameters using the mapping information, the feedback information indicating how a value for a further transmission parameter related to one or more further transmissions at the second apparatus (102) is to be adjusted to meet or approach the determined target quality; and
- using (503) the feedback information to adjust the value for the further transmission parameter related to the one or more further transmissions from the second apparatus (102) to the first apparatus (101).

7. The apparatus (101;102) of any preceding claim, wherein the one or more transmission parameters are part of control information used for scheduling the one or more transmissions from the second apparatus (102) to the first apparatus (101).

8. The apparatus (101;102) of any preceding claim, wherein the one or more values for the one or more transmission parameters respectively indicate information for configuring the first apparatus (101) to receive and/or decode the one or more transmissions and/or for scheduling the one or more transmissions and/or for acknowledging the one or more transmissions.

9. The apparatus (101;102) of any preceding claim, wherein the determined target quality is one or more of:
- a target block error rate
- a target bit error rate;
- a target signal to noise ratio;
- a target signal to interference and noise ratio;
- a target log-likelihood ratio;
- a target number of flipped bits;
- a target number of low-density parity-check code iterations;
- a target block error probability;
- a target number of failed parity checks;
- target mutual information; or
- a combination of a target block error rate and a number of retransmissions.

10. The apparatus (101;102) of any preceding claim, wherein the one or more transmission parameters are one or more of or relate to one or more of:
- a hybrid-automatic repeat request processes identifier;
- a physical layer priority;
- a number of multiple-input multiple-output layers;
- a used modulation and coding scheme table;
- a cell-radio network temporary identifier and/or a modulation and coding scheme-radio network temporary identifier;
- a downlink control information format;
- a parameter associated to a physical downlink control channel scheduling a physical downlink shared channel, e.g. physical downlink control channel aggregation level or a core set where a physical downlink control channel is detected;
- one or more transport block sizes;
- one or more modulation and coding scheme indexes;
- a number of repetitions;
- physical downlink shared channel to hybrid automatic repeat request timing;
- physical downlink shared channel without a corresponding physical downlink control channel or semi-persistent scheduled physical downlink shared channels;
- a semi-persistent scheduling configuration;
- one or more physical uplink control channel resources or physical uplink control channel resource sets;
- one or more quality of service parameters; or
- any other parameter associated with physical downlink shared channel.

11. The apparatus (101;102) of claim 3 or 6, wherein the one or more values for the one or more further transmission parameters are adjusted based on an offset.

12. The apparatus (101;102) of any preceding claim, wherein the feedback information comprises a delta modulation and coding scheme.

13. A method (200) comprising:
- receiving and/or storing, by a first apparatus (101), mapping information, wherein the mapping information provides a mapping between different values of one or more transmission parameters and different respective target qualities;
- receiving (201), by the first apparatus (101) from a second apparatus (102), one or more values for the one or more transmission parameters used for one or more transmissions from the second apparatus (102) to the first apparatus (101);
- determining (202) a target quality based at least on the one or more values for the one or more transmission parameters using the mapping information;
- determining (203) feedback information based at least on the determined target quality, the feedback information indicating how a value for a further transmission parameter that is associated with one or more further transmissions at the second apparatus (102) is to be adjusted to meet or approach the determined target quality; and
- transmitting (204) the feedback information to the second apparatus (102).

14. A method (500) comprising:
- transmitting mapping information to a first apparatus (101) and/or storing, by a second apparatus (102), mapping information, wherein the mapping information provides a mapping between different values of one or more transmission parameters and respective different target qualities;
- transmitting (501), by the second apparatus (102) to the first apparatus (101), one or more values for the one or more transmission parameters used for one or more transmissions from the second apparatus (102) to the first apparatus (101);
- receiving (502) feedback information from the first apparatus (101), wherein the feedback information is determined by the first apparatus (101) based at least on a target quality that is determined by the first apparatus (101) based at least on the one or more values for the one or more transmission parameters using the mapping information, the feedback information indicating how a value for a further transmission parameter related to one or more further transmissions at the second apparatus (102) is to be adjusted to meet or approach the determined target quality; and
- using (503) the feedback information to adjust the value for the further transmission parameter related to the one or more further transmissions from the second apparatus (102) to the first apparatus (101).

15. A system (100) comprising at least a first apparatus (101) and a second apparatus (102), wherein the second apparatus (102) comprises means configured to perform:
- transmitting mapping information to the first apparatus (101) and/or storing mapping information, wherein the mapping information provides a mapping between different values of one or more transmission parameters and respective different target qualities;
- transmitting (501), to the first apparatus (101), one or more values for the one or more transmission parameters used for one or more transmissions from the second apparatus (102) to the first apparatus (101);
- receiving (502) feedback information from the first apparatus (101), the feedback information indicating how a value for a further transmission parameter related to one or more further transmissions at the second apparatus (102) is to be adjusted to meet or approach the determined target quality; and
- using (503) the feedback information to adjust the value for the further transmission parameter related to the one or more further transmissions from the second apparatus (102) to the first apparatus (101);
and wherein the first apparatus (101) comprises means configured to perform:
- receiving and/or storing the mapping information;
- receiving (201) the one or more values for the one or more transmission parameters from the second apparatus (102);
- determining (202) a target quality based at least on the one or more values for the one or more transmission parameters using the mapping information;
- determining (203) the feedback information based at least on the determined target quality; and
- transmitting (204) the feedback information to the second apparatus (102).

## Patentansprüche

1. Eine erste Vorrichtung (101), die Mittel umfasst, die konfiguriert sind, um Folgendes auszuführen:
- Empfangen und/oder Speichern von Zuordnungsinformationen, wobei die Zuordnungsinformationen eine Zuordnung zwischen verschiedenen Werten von einem oder mehreren Übertragungsparametern und entsprechenden verschiedenen Zielqualitäten bereitstellen;
- Empfangen (201), von einer zweiten Vorrichtung (102), eines oder mehrerer Werte für den einen oder die mehreren Übertragungsparameter, die für eine oder mehrere Übertragungen von der zweiten Vorrichtung (102) zu der ersten Vorrichtung (101) verwendet werden;
- Bestimmen (202) einer Zielqualität zumindest auf der Grundlage des einen oder der mehreren Werte für den einen oder die mehreren Übertragungsparameter unter Verwendung der Zuordnungsinformationen;
- Bestimmen (203) von Rückmeldeinformationen zumindest auf der Grundlage der bestimmten Zielqualität, wobei die Rückmeldeinformationen angeben, wie ein Wert für einen weiteren Übertragungsparameter, der mit einer oder mehreren weiteren Übertragungen an der zweiten Vorrichtung (102) verbunden ist, einzustellen ist, um die bestimmte Zielqualität zu erfüllen oder sich ihr anzunähern; und
- Übertragen (204) der Rückmeldeinformationen an die zweite Vorrichtung (102).

2. Die erste Vorrichtung (101) nach Anspruch 1, wobei die Mittel weiterhin so konfiguriert sind, dass sie Folgendes ausführen:
- Empfangen der einen oder mehreren Übertragungen; und
- Schätzen einer Qualität der einen oder mehreren empfangenen Übertragungen, wobei die Rückkopplungsinformationen ferner zumindest auf der Grundlage der geschätzten Qualität bestimmt werden.

3. Die erste Vorrichtung (101) nach einem der vorhergehenden Ansprüche, wobei die Rückkopplungsinformationen von der zweiten Vorrichtung (102) verwendbar ist, um einen oder mehrere Werte für einen oder mehrere weitere Übertragungsparameter einzustellen, und wobei sich der eine oder die mehreren weiteren Übertragungsparameter auf eine oder mehrere weitere Übertragungen von der zweiten Vorrichtung (102) an die erste Vorrichtung (101) beziehen

4. Die erste Vorrichtung (101) nach Anspruch 3, wobei die Zielqualität bei der einen oder den mehreren weiteren Übertragungen mit dem so eingestellten einen oder mehreren Werten für den einen oder die mehreren weiteren Übertragungsparameter erreichbar ist.

5. Die erste Vorrichtung (101) nach einem der vorhergehenden Ansprüche, wobei die Mittel ferner konfiguriert sind, um durchzuführen:
- Prüfen, ob die Zielqualität basierend auf dem einen oder den mehreren Werten für den einen oder die mehreren Übertragungsparameter bestimmbar ist.

6. Eine zweite Vorrichtung (102), die Mittel umfasst, die konfiguriert sind, um Folgendes durchzuführen:
- Übertragen von Zuordnungsinformationen an eine erste Vorrichtung (101) und/oder Speichern von Zuordnungsinformationen, wobei die Zuordnungsinformationen eine Zuordnung zwischen verschiedenen Werten von einem oder mehreren Übertragungsparametern und entsprechenden verschiedenen Zielqualitäten bereitstellen;
- Übertragen (501) eines oder mehrerer Werte für den einen oder die mehreren Übertragungsparameter, die für eine oder mehrere Übertragungen von der zweiten Vorrichtung (102) zu der ersten Vorrichtung (101) verwendet werden, an die erste Vorrichtung (101);
- Empfangen (502) von Rückkopplungsinformationen von der ersten Vorrichtung (101), die von der ersten Vorrichtung (101) auf der Grundlage mindestens einer Zielqualität bestimmt werden, die von der ersten Vorrichtung (101) zumindest auf der Grundlage des einen oder der mehreren Werte für den einen oder die mehreren Übertragungsparameter unter Verwendung der Zuordnungsinformationen bestimmt wird, wobei die Rückkopplungsinformationen angeben, wie ein Wert für einen weiteren Übertragungsparameter in Bezug auf eine oder mehrere weitere Übertragungen an der zweiten Vorrichtung (102) einzustellen ist, um die bestimmte Zielqualität zu erreichen oder sich ihr anzunähern; und
- Verwenden (503) der Rückkopplungsinformation, um den Wert für den weiteren Übertragungsparameter in Bezug auf die eine oder mehrere weitere Übertragungen von der zweiten Vorrichtung (102) an die erste Vorrichtung (101) einzustellen.

7. Die Vorrichtung (101; 102) nach einem der vorhergehenden Ansprüche, wobei der eine oder die mehreren Übertragungsparameter Teil von Steuerinformationen sind, die zum Planen der einen oder mehreren Übertragungen von der zweiten Vorrichtung (102) an die erste Vorrichtung (101) verwendet werden.

8. Die Vorrichtung (101; 102) nach einem der vorhergehenden Ansprüche, wobei der eine oder die mehreren Werte für den einen oder die mehreren Übertragungsparameter jeweils Informationen angeben, um die erste Vorrichtung (101) zum Empfangen und/oder Dekodieren der einen oder mehreren Übertragungen zu konfigurieren, und/oder um eine oder mehrere Übertragungen zu planen und/oder um eine oder mehrere Übertragungen zu bestätigen.

9. Die Vorrichtung (101; 102) nach einem der vorhergehenden Ansprüche, wobei die bestimmte Zielqualität eine oder mehrere der folgenden ist:
- einer Ziel-Blockfehlerrate
- einer Ziel-Bitfehlerrate;
- ein Ziel-Signal-zu-Rausch-Verhältnis;
- ein Ziel-Signal-und-Interferenz-zu-Rausch-Verhältnis
- ein Ziel-Log-Likelihood-Verhältnis;
- eine Zielanzahl von umgedrehten Bits;
- eine Zielanzahl von Low-Density-Parity-Check-Code-Iterationen;
- eine Ziel-Blockfehlerwahrscheinlichkeit;
- eine Zielanzahl von fehlgeschlagenen Paritätsprüfungen;
- angestrebte gegenseitige Information; oder
- eine Kombination aus einer Ziel-Blockfehlerrate und einer Anzahl von Wiederholungsübertragungen.

10. Die Vorrichtung (101; 102) nach einem der vorhergehenden Ansprüche, wobei der eine oder die mehreren Übertragungsparameter einer oder mehrere der folgenden sind oder sich auf einen oder mehrere der folgenden beziehen:
- eine Hybrider-Automatische-Wiederholungsanforderungsprozesse-Kennung;
- eine Priorität der physikalischen Schicht;
- eine Anzahl von Schichten mit mehreren Eingängen und mehreren Ausgängen
- eine Tabelle der verwendeten Modulations- und Kodierungsschemata;
- eine temporäre Kennung für Zelle und Funknetz und/oder eine temporäre Kennung für Modulations- und Kodierungsschema und Funknetz;
- ein Downlink-Steuerinformationsformat;
- einen Parameter, der einem physikalischen Downlink-Steuerkanal zugeordnet ist, der einen gemeinsam genutzten physikalischen Downlink-Kanal plant, z. B. eine physikalische Downlink-Steuerkanal-Aggregationsebene oder eine Kerngruppe, in der ein physikalischer Downlink-Steuerkanal erkannt wird;
- eine oder mehrere Transportblockgrößen;
- ein oder mehrere Modulations- und Kodierungsschema-Indizes;
- eine Anzahl von Wiederholungen;
- Timing von gemeinsam genutzten physikalischen Downlink-Kanal und hybrider automatischer Wiederholungsanforderung;
- gemeinsam genutzter physikalischer Downlink-Kanal ohne entsprechenden physikalischen Downlink-Steuerkanal oder semi-persistente geplante gemeinsam genutzte physikalische Downlink-Kanäle;
- eine semi-persistente Planungskonfiguration;
- eine oder mehrere physikalische Uplink-Steuerkanalressourcen oder physikalische Uplink-Steuerkanalressourcensätze;
- einen oder mehrere Dienstgüteparameter oder
- irgendein anderer Parameter, der mit einem gemeinsam genutzten physikalischen Downlink-Kanal verbunden ist.

11. Die Vorrichtung (101; 102) nach Anspruch 3 oder 6, wobei der eine oder die mehreren Werte für den einen oder die mehreren weiteren Übertragungsparameter auf der Grundlage eines Versatzes eingestellt werden.

12. Die Vorrichtung (101; 102) nach einem der vorhergehenden Ansprüche, wobei die Rückkopplungsinformationen ein Delta-Modulations- und Kodierungsschema umfassen.

13. Verfahren (200), umfassend:
- Empfangen und/oder Speichern von Zuordnungsinformationen durch eine erste Vorrichtung (101), wobei die Zuordnungsinformationen eine Zuordnung zwischen verschiedenen Werten von einem oder mehreren Übertragungsparametern und entsprechenden verschiedenen Zielqualitäten bereitstellen;
- Empfangen (201), durch die erste Vorrichtung (101) von einer zweiten Vorrichtung (102), eines oder mehrerer Werte für den einen oder die mehreren Übertragungsparameter, die für eine oder mehrere Übertragungen von der zweiten Vorrichtung (102) zu der ersten Vorrichtung (101) verwendet werden;
- Bestimmen (202) einer Zielqualität zumindest auf der Grundlage des einen oder der mehreren Werte für den einen oder die mehreren Übertragungsparameter unter Verwendung der Zuordnungsinformationen;
- Bestimmen (203) von Rückmeldeinformationen zumindest auf der Grundlage der bestimmten Zielqualität, wobei die Rückmeldeinformationen angeben, wie ein Wert für einen weiteren Übertragungsparameter, der mit einer oder mehreren weiteren Übertragungen an der zweiten Vorrichtung (102) verbunden ist, einzustellen ist, um die bestimmte Zielqualität zu erfüllen oder sich ihr anzunähern; und
- Übertragen (204) der Rückmeldeinformationen an die zweite Vorrichtung (102).

14. Ein Verfahren (500), das Folgendes umfasst:
- Übertragen von Zuordnungsinformationen an eine erste Vorrichtung (101) und/oder Speichern von Zuordnungsinformationen durch eine zweite Vorrichtung (102), wobei die Zuordnungsinformationen eine Zuordnung zwischen verschiedenen Werten eines oder mehrerer Übertragungsparameter und entsprechenden verschiedenen Zielqualitäten bereitstellen;
- Übertragen (501) eines oder mehrerer Werte für den einen oder die mehreren Übertragungsparameter, die für eine oder mehrere Übertragungen von der zweiten Vorrichtung (102) zur ersten Vorrichtung (101) verwendet werden, durch die zweite Vorrichtung (102) an die erste Vorrichtung (101);
- Empfangen (502) von Rückkopplungsinformationen von der ersten Vorrichtung (101), wobei die Rückkopplungsinformationen von der ersten Vorrichtung (101) zumindest auf der Grundlage einer Zielqualität bestimmt werden, die von der ersten Vorrichtung (101) zumindest auf der Grundlage des einen oder der mehreren Werte für den einen oder die mehreren Übertragungsparameter unter Verwendung der Zuordnungsinformationen bestimmt wird, wobei die Rückkopplungsinformationen angeben, wie ein Wert für einen weiteren Übertragungsparameter, der sich auf eine oder mehrere weitere Übertragungen an der zweiten Vorrichtung (102) bezieht, einzustellen ist, um die bestimmte Zielqualität zu erreichen oder sich dieser anzunähern; und
- Verwenden (503) der Rückmeldungsinformationen, um den Wert für den weiteren Übertragungsparameter anzupassen, der sich auf die eine oder mehreren weiteren Übertragungen von der zweiten Vorrichtung (102) an die erste Vorrichtung (101) bezieht.

15. Ein System (100) mit mindestens einer ersten Vorrichtung (101) und einer zweiten Vorrichtung (102), wobei die zweite Vorrichtung (102) Mittel umfasst, die konfiguriert sind, um Folgendes durchzuführen:
- Übertragen von Zuordnungsinformationen an die erste Vorrichtung (101) und/oder Speichern von Zuordnungsinformationen, wobei die Zuordnungsinformationen eine Zuordnung zwischen verschiedenen Werten von einem oder mehreren Übertragungsparametern und entsprechenden verschiedenen Zielqualitäten bereitstellen;
- Übertragen (501) eines oder mehrerer Werte für den einen oder die mehreren Übertragungsparameter, die für eine oder mehrere Übertragungen von der zweiten Vorrichtung (102) zu der ersten Vorrichtung (101) verwendet werden, an die erste Vorrichtung (101);
- Empfangen (502) von Rückkopplungsinformationen von der ersten Vorrichtung (101), wobei die Rückkopplungsinformationen angeben, wie ein Wert für einen weiteren Übertragungsparameter, der sich auf eine oder mehrere weitere Übertragungen an der zweiten Vorrichtung (102) bezieht, einzustellen ist, um die bestimmte Zielqualität zu erreichen oder sich ihr anzunähern; und
- Verwenden (503) der Rückkopplungsinformationen zum Einstellen des Wertes für den weiteren Übertragungsparameter in Bezug auf die eine oder mehrere weitere Übertragungen von der zweiten Vorrichtung (102) zu der ersten Vorrichtung (101);
und wobei die erste Vorrichtung (101) Mittel umfasst, die konfiguriert sind, um Folgendes durchzuführen:
- Empfangen und/oder Speichern der Zuordnungsinformationen;
- Empfangen (201) des einen oder der mehreren Werte für den einen oder die mehreren Übertragungsparameter von der zweiten Vorrichtung (102);
- Bestimmen (202) einer Zielqualität zumindest auf der Grundlage des einen oder der mehreren Werte für den einen oder die mehreren Übertragungsparameter unter Verwendung der Zuordnungsinformationen;
- Bestimmen (203) der Rückkopplungsinformationen zumindest auf der Grundlage der bestimmten Zielqualität; und
- Übertragen (204) der Rückkopplungsinformationen an die zweite Vorrichtung (102).

## Revendications

1. Un premier dispositif (101) comprenant des moyens configurés pour effectuer :
- recevoir et/ou stocker des informations de mappage, où les informations de mappage fournissent un mappage entre différentes valeurs d'un ou plusieurs paramètres de transmission et différentes qualités cibles respectives ;
- recevoir (201), d'un deuxième dispositif (102), une ou plusieurs valeurs pour les un ou plusieurs paramètres de transmission utilisés pour une ou plusieurs transmissions à partir du deuxième dispositif (102) au premier dispositif (101) ;
- déterminer (202) une qualité cible basée au moins sur les une ou plusieurs valeurs pour les un ou plusieurs paramètres de transmission en utilisant les informations de mappage ;
- déterminer (203) des informations de retour basées au moins sur la qualité cible déterminée, les informations de retour indiquant comment une valeur pour un paramètre de transmission supplémentaire associé à une ou plusieurs transmissions supplémentaires au deuxième dispositif (102) est à être ajustée pour atteindre ou approcher la qualité cible déterminée ; et
- transmettre (204) les informations de retour au deuxième dispositif (102).

2. Le premier dispositif (101) selon la revendication 1, où les moyens sont en outre configurés pour effectuer :
- recevoir les une ou plusieurs transmissions ; et
- estimer une qualité des une ou plusieurs transmissions reçues, où les informations de retour sont déterminées en outre basées au moins sur la qualité estimée.

3. Le premier dispositif (101) selon l'une des revendications précédentes, où les informations de retour sont utilisables par le deuxième dispositif (102) pour ajuster une ou plusieurs valeurs pour un ou plusieurs paramètres de transmission supplémentaires, et où les un ou plusieurs paramètres de transmission supplémentaires concernent une ou plusieurs transmissions supplémentaires du deuxième dispositif (102) au premier dispositif (101).

4. Le premier dispositif (101) selon la revendication 3, où la qualité cible est réalisable par les une ou plusieurs transmissions supplémentaires avec les une ou plusieurs valeurs ainsi ajustées pour les un ou plusieurs paramètres de transmission supplémentaires.

5. Le premier dispositif (101) selon l'une des revendications précédentes, où les moyens sont en outre configurés pour effectuer :
- vérifier si la qualité cible est déterminable sur la base des une ou plusieurs valeurs pour les un ou plusieurs paramètres de transmission.

6. Un deuxième dispositif (102) comprenant des moyens configurés pour effectuer :
- transmettre des informations de mappage à un premier dispositif (101) et/ou stocker des informations de mappage, où les informations de mappage fournissent un mappage entre différentes valeurs d'un ou plusieurs paramètres de transmission et différentes qualités cibles respectives ;
- transmettre (501), au premier dispositif (101), une ou plusieurs valeurs pour les un ou plusieurs paramètres de transmission utilisés pour une ou plusieurs transmissions du deuxième dispositif (102) au premier dispositif (101) ;
- recevoir (502), du premier dispositif (101), des informations de retour déterminées par le premier dispositif (101) basées au moins sur une qualité cible déterminée par le premier dispositif (101) basée au moins sur les une ou plusieurs valeurs pour les un ou plusieurs paramètres de transmission en utilisant les informations de mappage, les informations de retour indiquant comment une valeur pour un paramètre de transmission supplémentaire lié à une ou plusieurs transmissions supplémentaires au deuxième dispositif (102) est à être ajustée pour atteindre ou approcher la qualité cible déterminée ; et
- utiliser (503) les informations de retour pour ajuster la valeur pour le paramètre de transmission supplémentaire lié aux une ou plusieurs transmissions supplémentaires du deuxième dispositif (102) au premier dispositif (101).

7. Le dispositif (101;102) selon l'une des revendications précédentes, où les un ou plusieurs paramètres de transmission font partie d'informations de commande utilisées pour l'ordonnancement des une ou plusieurs transmissions du deuxième dispositif (102) au premier dispositif (101).

8. Le dispositif (101;102) selon l'une des revendications précédentes, où les une ou plusieurs valeurs pour les un ou plusieurs paramètres de transmission indiquent respectivement des informations pour configurer le premier dispositif (101) pour recevoir et/ou décoder les une ou plusieurs transmissions et/ou pour l'ordonnancement des une ou plusieurs transmissions et/ou pour un accusé de réception des une ou plusieurs transmissions.

9. Le dispositif (101;102) selon l'une des revendications précédentes, où la qualité cible déterminée est un ou plusieurs parmi :
- un taux d'erreur de bloc cible
- un taux d'erreur de bit cible ;
- un rapport signal sur bruit cible ;
- un rapport signal sur interférence et bruit cible ;
- un rapport de vraisemblance logarithmique cible ;
- un nombre cible de bits inversés ;
- un nombre cible d'itérations de code LDPC ;
- une probabilité d'erreur de bloc cible ;
- un nombre cible de vérifications de parité échouées ;
- une information mutuelle cible ; ou
- une combinaison d'un taux d'erreur de bloc cible et d'un nombre de retransmissions.

10. Le dispositif (101;102) selon l'une des revendications précédentes, où les un ou plusieurs paramètres de transmission sont un ou plusieurs parmi ou concernent un ou plusieurs parmi :
- un identifiant de processus de demande de répétition automatique hybride (HARQ) ;
- une priorité de couche physique ;
- un nombre de couches d'entrées multiples sorties multiples (MIMO) ;
- une table de schéma de modulation et de codage (MCS) utilisée ;
- un identifiant temporaire de réseau radio cellulaire et/ou un identifiant temporaire de réseau radio de schéma de modulation et de codage (MCS) ;
- un format d'informations de commande de liaison descendante (DCI) ;
- un paramètre associé à un canal de contrôle de liaison descendante physique (PDCCH) ordonnançant un canal partagé de liaison descendante physique (PDSCH), par exemple le niveau d'agrégation du canal de contrôle de liaison descendante physique (PDCCH) ou un ensemble central (CORESET) où un canal de contrôle de liaison descendante physique (PDCCH) est détecté ;
- une ou plusieurs tailles de blocs de transport ;
- un ou plusieurs index de schéma de modulation et de codage (MCS) ;
- un nombre de répétitions ;
- timing du canal partagé de liaison descendante physique (PDSCH) vers la demande de répétition automatique hybride (HARQ) ;
- canal partagé de liaison descendante physique (PDSCH) sans canal de contrôle de liaison descendante physique (PDCCH) correspondant ou canaux partagés de liaison descendante physique (PDSCH) ordonnancés de manière semi-persistante ;
- une configuration d'ordonnancement semi-persistant (SPS) ;
- une ou plusieurs ressources du canal de contrôle de liaison montante physique (PUCCH) ou ensembles de ressources du canal de contrôle de liaison montante physique (PUCCH) ;
- un ou plusieurs paramètres de qualité de service (QoS) ; ou
- un autre paramètre quelconque associé au canal partagé de liaison descendante physique (PDSCH).

11. Le dispositif (101;102) selon la revendication 3 ou 6, où les une ou plusieurs valeurs pour les un ou plusieurs paramètres de transmission supplémentaires sont ajustées basé sur un décalage

12. Le dispositif (101;102) selon l'une des revendications précédentes, où les informations de retour comprennent un schéma delta de modulation et de codage.

13. Une méthode (200) comprenant :
- recevoir et/ou stocker, par un premier dispositif (101), des informations de mappage, où les informations de mappage fournissent un mappage entre différentes valeurs d'un ou plusieurs paramètres de transmission et différentes qualités cibles respectives ;
- recevoir (201), par le premier dispositif (101) à partir d'un deuxième dispositif (102), une ou plusieurs valeurs pour les un ou plusieurs paramètres de transmission utilisés pour une ou plusieurs transmissions du deuxième dispositif (102) au premier dispositif (101) ;
- déterminer (202) une qualité cible basée au moins sur les une ou plusieurs valeurs pour les un ou plusieurs paramètres de transmission en utilisant les informations de mappage ;
- déterminer (203) des informations de retour basées au moins sur la qualité cible déterminée, les informations de retour indiquant comment une valeur pour un paramètre de transmission supplémentaire associé à une ou plusieurs transmissions supplémentaires au deuxième dispositif (102) est à être ajustée pour atteindre ou approcher la qualité cible déterminée ; et
- transmettre (204) les informations de retour au deuxième dispositif (102).

14. Une méthode (500) comprenant:
- transmettre des informations de mappage à un premier dispositif (101) et/ou stocker, par un deuxième dispositif (102), des informations de mappage, où les informations de mappage fournissent un mappage entre différentes valeurs d'un ou plusieurs paramètres de transmission et différentes qualités cibles respectives ;
- transmettre (501), par le deuxième dispositif (102) au premier dispositif (101), une ou plusieurs valeurs pour les un ou plusieurs paramètres de transmission utilisés pour une ou plusieurs transmissions du deuxième dispositif (102) au premier dispositif (101) ;
- recevoir (502) des informations de retour du premier dispositif (101), où les informations de retour sont déterminées par le premier dispositif (101) basées au moins sur une qualité cible déterminée par le premier dispositif (101) basée au moins sur les une ou plusieurs valeurs pour les un ou plusieurs paramètres de transmission en utilisant les informations de mappage, les informations de retour indiquant comment une valeur pour un paramètre de transmission supplémentaire lié à une ou plusieurs transmissions supplémentaires au deuxième dispositif (102) est à être ajustée pour atteindre ou approcher la qualité cible déterminée ; et
- utiliser (503) les informations de retour pour ajuster la valeur pour le paramètre de transmission supplémentaire lié aux une ou plusieurs transmissions supplémentaires du deuxième dispositif (102) au premier dispositif (101).

15. Un système (100) comprenant au moins un premier dispositif (101) et un deuxième dispositif (102), où le deuxième dispositif (102) comprend des moyens configurés pour effectuer :
- transmettre des informations de mappage au premier dispositif (101) et/ou stocker des informations de mappage, où les informations de mappage fournissent un mappage entre différentes valeurs d'un ou plusieurs paramètres de transmission et différentes qualités cibles respectives ;
- transmettre (501), au premier dispositif (101), une ou plusieurs valeurs pour les un ou plusieurs paramètres de transmission utilisés pour une ou plusieurs transmissions du deuxième dispositif (102) au premier dispositif (101) ;
- recevoir (502) des informations de retour du premier dispositif (101), les informations de retour indiquant comment une valeur pour un paramètre de transmission supplémentaire lié à une ou plusieurs transmissions supplémentaires au deuxième dispositif (102) est à être ajustée pour atteindre ou approcher la qualité cible déterminée ; et
- utiliser (503) les informations de retour pour ajuster la valeur pour le paramètre de transmission supplémentaire lié aux une ou plusieurs transmissions supplémentaires de deuxième dispositif (102) au premier dispositif (101) ;
et où le premier dispositif (101) comprend des moyens configurés pour effectuer :
- recevoir et/ou stocker les informations de mappage ;
- recevoir (201) les une ou plusieurs valeurs pour les un ou plusieurs paramètres de transmission à partir du deuxième dispositif (102) ;
- déterminer (202) une qualité cible basée au moins sur les une ou plusieurs valeurs pour les un ou plusieurs paramètres de transmission en utilisant les informations de mappage ;
- déterminer (203) les informations de retour basées au moins sur la qualité cible déterminée ; et
- transmettre (204) les informations de retour au deuxième dispositif (102).
